(19) Europäisches Patentamt
European Patent Office
Office européen des brevets

(11) **EP 4 176 252 B1**

(12) **EUROPEAN PATENT SPECIFICATION**

(45) Date of publication and mention
of the grant of the patent:
**02.07.2025  Bulletin 2025/27**

(21) Application number: **21730181.1**

(22) Date of filing: **31.05.2021**

(51) International Patent Classification (IPC):
**G01N 29/02** (2006.01)    **G01N 29/036** (2006.01)
**G01N 29/44** (2006.01)    **G03F 7/00** (2006.01)
**G01N 29/24** (2006.01)

(52) Cooperative Patent Classification (CPC):
**G01N 29/2443; G01N 29/022; G01N 29/036;**
G01N 2291/0215; G01N 2291/0257

(86) International application number:
**PCT/EP2021/064518**

(87) International publication number:
**WO 2022/002507 (06.01.2022 Gazette 2022/01)**

(54) **SENSOR ARRAYS AND ELECTRONIC NOSES FOR ENANTIOSELECTIVE SUBSTANCE DETECTION**

SENSORANORDNUNGEN UND ELEKTRONISCHE NASEN ZUR ENANTIOSELEKTIVEN SUBSTANZDETEKTION

ARRAYS DE CAPTEURS ET NOS ÉLECTRONIQUES POUR LA DÉTECTION DE SUBSTANCES ENANTIOSÉLECTIVES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.07.2020  EP 20183999**

(43) Date of publication of application:
**10.05.2023  Bulletin 2023/19**

(73) Proprietor: **Karlsruher Institut für Technologie**
**76131 Karlsruhe (DE)**

(72) Inventors:
• **HEINKE, Lars**
  **76133 Karlsruhe (DE)**
• **OKUR, Salih**
  **76227 Karlruhe (DE)**
• **LEMMER, Ulrich**
  **76228 Karlsruhe (DE)**
• **WÖLL, Christof**
  **76185 Karlsruhe (DE)**

(74) Representative: **Meissner Bolte Düsseldorf**
**Patentanwälte Rechtsanwälte**
**Partnerschaft mbB**
**Kaiserswerther Straße 183**
**40474 Düsseldorf (DE)**

(56) References cited:
**WO-A2-2014/125383        CN-A- 110 501 397**
**US-A1- 2018 195 990**

• **SALIH OKUR ET AL: "Towards a MOF e-Nose: A SURMOF sensor array for detection and discrimination of plant oil scents and their mixtures", SENSORS AND ACTUATORS B: CHEMICAL, vol. 306, 30 November 2019 (2019-11-30), pages 1 - 6, XP055752329**
• **CHENG-HUA DENG ET AL: "The electrochemical discrimination of pinene enantiomers by a cyclodextrin metal-organic framework", DALTON TRANSACTIONS, vol. 46, no. 21, 1 January 2017 (2017-01-01), pages 6830 - 6834, XP055752450, ISSN: 1477-9226, DOI: 10.1039/C7DT00808B**

- BENJAMIN K. KEITZ ET AL: "Lithographic Deposition of Patterned Metal-Organic Framework Coatings Using a Photobase Generator", ANGEWANDTE CHEMIE INTERNATIONAL EDITION, vol. 53, no. 22, 26 May 2014 (2014-05-26), pages 5561 - 5565, XP055233339, ISSN: 1433-7851, DOI: 10.1002/anie.201400580

**Description**

The present invention is directed to sensor arrays and electronic noses, particularly based on chiral metal-organic frameworks, for enantioselective substance detection.

In the present application, including the claims, other than in the operating examples or where otherwise indicated, all numbers expressing quantities or characteristics are to be understood as being modified in all instances by the term "about". Accordingly, unless indicated to the contrary, any numerical parameters set forth in the following description may vary depending on the desired properties one seeks to obtain in the compositions and methods according to the present disclosure.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10. The terms "one," "a," or "an" as used herein are intended to include "at least one" or "one or more," unless otherwise indicated.

Background of the invention:

Chirality and enantioselectivity are fundamental in nature and crucial in various fields, ranging from DNA molecules to pharmaceuticals. Most chiral odour molecules have an enantioselective smell, meaning that the perception of the enantiomers by the human nose significantly differs. Among the most popular examples is limonene: While the R-isomer has an odour of orange, the S-isomer smells like lemons. For 1-phenylethanol, the R-isomer has a floral, earthy-green odour, while the S-isomer smells like mild hyacinth with a strawberry nuance. For 2-octanol, the odour of the R-enantiomer is described as creamy, cucumber, fatty and sour, while the S-enantiomer has more a mushroom odour. These odours and fragrances are often characterized by a panel of judges with "trained noses". For quantification, the compositions of chiral odour samples are typically analysed by enantioselective chromatography with enantiopure columns. When optimized, this method is very precise and sensitive, however, due to its complexity and setup size it is not suited for practical application as sensor.

Several efforts have been made to fabricate enantioselective sensors. Different chiral materials based on chiral polymers, supramolecular chiral systems, carbon-nanotubes, or graphene functionalized with chiral molecules were used to discriminate the enantiomers of one chiral molecule in a sensor setup. For example, the S-enantiomers of alpha-pinene, of beta-pinene or of limonene can be separately distinguished from their R-enantiomers by DNA-functionalized carbon-nanotubes. Films of nanoporous enantiopure materials, like enantiopure metal-organic frameworks (MOFs), seem perfectly suited for sensing applications. In addition to their record specific surface area resulting in high sensitivities, a striking advantage of MOFs is their huge variety with about 100.000 published structures and at least hundreds, presumably many thousands, of enantiopure MOF structures. So far, numerous enantiopure metal-organic frameworks, MOFs, were used to discriminate the enantiomers of one chiral molecule. R- and S-enantiomers are typically distinguished by using chromatography or gravimetric techniques taking advantage of their enantioselective adsorption strength in the chiral nanopores.

E-nose systems without enantioselectivity are already known and used to detect odours, for instance to assess food authenticity and adulteration. The active sensing materials in such e-noses are typically based on polymers or inorganic materials with large surface area. It is also known to employ metal-organic frameworks for e-nose application. So far, enantioselective discrimination is realized by the combination of the e-nose with an enantioselective technique like chiral chromatography or electrophoresis.

For example, WO 99/40423A1 discloses various possible ideas on how to make sensors, possibly for enantiomeric detection; US 2015/0150778 A1 discloses sensor arrays in which the detection is based on measuring electrical resistances and WO 2008/096239 A1 describes organic thin film transistors that can detect compounds by the aid of very specific sulphur-containing organic compounds.

Satisfactory sensor arrays which detect and discriminate the enantiomers of various molecules simultaneously are still needed.

Objects of the invention:

It was accordingly an object of the present invention to provide sensor arrays that are able to detect and discriminate the enantiomers of various molecules simultaneously and with high accuracy.

It was a further object of the invention to provide electronic noses that are able to detect and discriminate the enantiomers of various molecules simultaneously and with high accuracy.

Further objects will become apparent to those skilled in the art upon regarding the following disclosure.

Solution of the Invention:

These and other objects are solved by the matter outlined in the appended independent claims.

Preferred embodiments are outlined in the dependent claims as well as the following description.

Detailed description:

The present invention is directed to arrays of sensors coated with nanoporous metal-organic framework (MOF) thin films of different enantiopure and achiral structures, working as an enantioselective electronic nose for volatile compounds in the gas phase. While the achiral-MOF-film sensors show identical responses for the chiral enantiomers, the responses of the enantiopure MOF films differ for the different isomers. Embodiments of the present invention use machine learning algorithms (using k-Nearest Neighbours) with the combined data from enantiopure and achiral MOF sensor array for the stereoselective identification of compounds and discrimination of chiral volatile molecules.

The present invention relates particularly to sensor arrays for odour detection, more particularly for the enantioselective discrimination of chiral odours. Enantioselective detection of chiral odours, like R- and S-limonene, which can be discriminated by the human nose but cannot be discriminated with conventional electronic noses. Particularly, it relates to an array of metal organic frameworks (MOFs) sensors used for constructing "electronic noses". Machine learning algorithms (for example k-Nearest Neighbours) allow the stereoselective identification of all compounds from the combined sensor array data. So, a chiral-MOF-e-nose is a sensor setup able to enantioselectively detect and discriminate chiral volatile compounds (VOCs).

The sensors or sensor arrays of the present invention are capable of distinguishing or differentiating between chiral compounds, such as enantiomers, i.e., optical isomers.

The sensor arrays of the present invention are able to work like or more particularly as part of an electronic nose, e-nose, and are composed of different sensors, particularly also different enantioselective sensors, allowing to distinguish various chiral molecules and their enantiomers.

The present invention thus also relates to a device for detecting the presence or absence of an analyte in a fluid, preferably a liquid phase or a gas phase, particularly preferred a gas phase, wherein the device comprises a sensor, the sensor comprising a chiral region. In embodiments the device would be or be described as an electronic nose. In preferred embodiments, the sensor comprises an enantiopure region and achiral region, wherein at least three of sensing MOF structures are chiral, and wherein the analyte medium, particularly gas, generates a differential response across the sensor.

In certain preferred embodiments of the present invention, the analyte can be in liquid phase and contacts the chiral region of the sensor.

In other preferred embodiments of the present invention the analyte can be in a gaseous phase and contacts the chiral region of the sensor.

The analyte, by itself or as part of an analyte containing medium, being preferably liquid or gaseous, especially gaseous, can be chiral or achiral.

To this end, the present invention is specifically directed to the following embodiments.

In one embodiment the present invention relates to a sensor array comprising or consisting of

A) at least one chiral metal-organic framework,
B) at least one achiral metal-organic framework,

wherein the metal organic frameworks are each coated onto at least one sensor substrate and the differently coated sensors form the array.

Therefore, in this embodiment the smallest possible sensor array would be one in which only one chiral metal-organic framework is coated onto one sensor substrate and one achiral metal-organic framework is coated onto one sensor substrate. However, usually the sensor array would comprise much more individual sensor units. In this context, a sensor unit would, therefore, be a sensor substrate onto which one chiral metal-organic framework or one achiral metal-organic framework is coated. Obviously, by increasing the number of individual sensor units the accuracy and detection limits of the sensor array could be improved.

Therefore, in embodiments of the present invention it is preferred that the sensor array comprises at least 10 individual sensor units and more preferably at least 100 individual sensor units.

In such sensor arrays, the ratio of chiral sensor units to achiral sensor units is usually within the range of 0.8:1.2 to 1.2:0.8, preferably about 1:1.

In other embodiments of the present invention, the sensor arrays would be based on sensor substrates that are quartz-crystal microbalance sensors.

In embodiments of the present invention, Transistor (especially FET) and capacitance methods for sensing can be employed instead of QCM sensors.

Optionally, the sensor substrates based on quartz-crystal microbalance (QCM) sensors could be combined or substituted with one or more sensors selected from the group consisting of

- fibre optical sensors and surface acoustical wave sensors;
- solid state detectors, preferably ultraviolet, visible and near-infrared radiation micro sensors, particularly as photoconductive cells, photodiodes, phototransistors;
- mechanical sensors, preferably displacement microsensors, capacitive and inductive displacement sensors, optical displacement sensors, ultrasonic displacement sensors;
- chemical or biochemical sensors, preferably metal oxide gas sensors, particularly tin oxide gas sensors, organic gas sensors, particularly inorganic Schottky devices, metal oxide field-effect transistor (metal oxide semiconductor field-effect transistor equal sign MOSFET), electrochemical cell sensors, infrared sensors, surface plasmon sensors;
- sintered metal oxide sensors, phthalocyanine sensors, conducting polymer sensors, lipid coating sensors and metal FET structures;
- metal oxide sensors, preferably as catalytic gas sensors, organic semi conducting gas sensors, solid electrolyte gas sensors, Langmuire-Blodgett films, and mixtures thereof.

In preferred embodiments of the present invention, only quartz-crystal microbalance sensors alone are used as sensors. In more preferred embodiments, the quartz-crystal microbalance sensors are coated with a metal, preferably a conductive metal, especially coated with gold or gold alloys; the most preferred coating is of gold.

When combining the preferred quartz-crystal microbalance sensors with sensor units based on the other mentioned sensor substrates it becomes possible to prepare sensor arrays that can be more finely tuned to the respective needs of the desired application.

However, in the most preferred embodiments of the present invention, only quartz-crystal microbalance sensors alone are used because then only one kind of sensor response is generated and it is easier to connect suitable detection units designed to detect the signals of the quartz-crystal microbalance sensors (QCM sensors), specifically.

While the present invention can be based on at least one chiral metal organic framework and at least one achiral metal-organic framework, the present invention preferably employs sensor arrays that comprise

A) at least two different chiral metal-organic frameworks, preferably at least three different chiral metal-organic frameworks and especially preferred three different chiral metal-organic frameworks.
Also, it is one preferred embodiment that the sensor array comprises
B) at least two different achiral metal-organic frameworks, preferably at least three different achiral metal- organic frameworks and especially preferred three different achiral metal-organic frameworks.

In other words, it is possible to employ one chiral metal-organic framework-based sensor unit with more than one achiral metal-organic framework-based sensor unit and vice versa.

However, it is most preferred that the sensor array of the present invention comprises

A) at least two different chiral metal-organic frameworks, preferably at least three different chiral metal-organic frameworks and especially preferred three different chiral metal-organic frameworks
and at the same time comprises
B) at least two different achiral metal-organic frameworks, preferably at least three different achiral metal-organic frameworks and especially preferred three different achiral metal-organic frameworks.

It was found in the context of the present invention that sensor arrays with three different chiral metal-organic framework-based sensor units in combination with three different achiral metal-organic framework-based sensor units provide particularly good results.

However, it should be noted that it is also within the purview of the present invention that the sensor array, as hinted above, comprises at least 10 sensor units or at least 100 sensor units, wherein the ratios of the chiral to achiral sensor units is given as above.

It is possible in the present invention to use chiral metal-organic frameworks in which both enantiomers of a given chirality imparting molecule are present, however with the proviso that one of the enantiomers is present in a higher amount than the other.

For example, it is possible to provide chiral metal-organic frameworks in which the ratio of the enantiomers is for example 75 to 25.

It is most preferred according to the present invention, however, that the chiral metal-organic frameworks are enantiopure.

In preferred embodiments of the present invention, the metal-organic frameworks each have a three-layered structure.

That three-layered structure comprises

a) a fist layer of the respective chiral or achiral group,
b) a second layer of the respective chiral or achiral group,
c) between these two layers a) and b) a linker layer L.

In this structure, the respective chiral or achiral groups in layers a) and b) are preferably the same for each chiral metal-organic framework or achiral metal-organic framework, respectively, though in other embodiments it is also possible that the chiral or achiral groups in layers a) and b) are different.

In preferred embodiments, the respective layers are monolayers, wherein in particularly preferred embodiments these are self-assembled monolayers of the respective groups or linkers.

In preferred embodiments the linker layer L is formed from N-donor ligands. Particularly preferred examples for such compounds are diazabicyclo[2.2.2]octane (dabco), 4,4'-bipyridyl (BiPy) and 1,4-bis(4-pyridyl)benzene (BiPyB).

In preferred embodiments of the present invention, the chiral metal-organic framework A) of each sensor unit is selected from the group consisting of chirMOF1, chirMOF2 and chirMOF3. Preferred embodiments of the present invention are directed to sensor arrays in which the entirety of the chiral sensor units comprises sensor units in which each of the three chiral metal-organic frameworks is present. In particularly preferred embodiments, the ratio of chiral metal-organic framework A) sensor units based of chirMOF1, chirMOF2 and chirMOF3 are about 1:1:1.

In preferred embodiments of the present invention, the achiral metal-organic framework B) of each sensor unit is selected from the group consisting of achirMOF1, achirMOF2 and achirMOF3. Preferred embodiments of the present invention are directed to sensor arrays in which the entirety of the achiral sensor units comprises sensor units in which each of the three achiral metal-organic frameworks is present.

In particularly preferred embodiments, the ratio of achiral metal-organic framework A) sensor units based of achirMOF1, achirMOF2 and achirMOF3 are about 1:1:1.

While it is possible in the context of the present invention to combine the respective mentioned metal-organic frameworks A) selected from chirMOF1, chirMOF2 and chirMOF3 with other achiral metal-organic frameworks B) than those mentioned (achirMOF1, achirMOF2, achirMOF3) it is preferred that the chiral metal-organic frameworks are only selected from the group consisting of chirMOF1, chirMOF2, chirMOF3 and are combined only with achiral metal-organic frameworks selected from the group consisting of achirMOF1, achirMOF2 and achirMOF3.

In the context of the present invention, the abbreviations chirMOF1, chirMOF2, chirMOF3, achirMOF1, achirMOF2 and achirMOF3 represent the following compounds:

- chirMOF1 is an enantiopure pillar-layered metal-organic framework of the type $Cu_2(Dcam)_2(L)$ in which the linker L is diazabicyclo[2.2.2] octane (dabco),
- chirMOF2 is an enantiopure pillar-layered MOF of the same type in which the pillar linker L is 4,4'-bipyridyl (BiPy)
- chirMOF3 is an enantiopure pillar-layered MOF of the same type in which the pillar linker L is 1,4-bis(4-pyridyl) benzene (BiPyB),
- achirMOF1 is an HKUST-1 metal-organic framework film,
- achirMOF2 is Cu(BDC), wherein BDC is benzene-1,4-dicarboxylic acid which forms a stacked, sheet-like MOF structure with Cu,
- achirMOF3 is Cu(BPDC), wherein BPDC is biphenyl-4,4'-dicarboxylic acid, forms a stacked, sheet-like MOF structure like Cu(BDC) with Cu but with larger pores.

Here, Dcam represents chiral (1*R*,3*S*)-(+)-camphoric acid layer linker, i.e. the layer is made of (1*R*,3*S*)-(+)-camphoric acid molecules.

The preferred sensor substrates of the present invention are gold-coated quartz-crystal microbalance substrates. Even more preferred in some embodiments it is that these gold-coated quartz-crystal microbalance substrates are additionally functionalized. In particularly preferred embodiments, the gold-coated quartz-crystal microbalance substrates are functionalized with one or more self-assembled organic monolayers. Of these, a particularly preferred example is 11-mercapto-1-undecanol self-assembled monolayer.

According to the present invention sensor arrays are disclosed which comprise or consist of at least one group of

A) three different chiral metal-organic frameworks, being chirMOF1, chirMOF2, chirMOF3, respectively, and
B) three different achiral metal-organic frameworks being achirMOF1, achirMOF2, achirMOF3, respectively,

wherein the metal organic frameworks are each coated onto one optionally functionalized quartz-crystal microbalance sensor, respectively.

Accordingly, the present invention includes sensor arrays in which just one described group is present, in which case the array would be equal to the group. However, it is also within the scope of the present invention to combine several of these groups to a sensor array. In fact, it is preferred that the sensor array comprises at least 100 of these groups, more preferably at least 1.000 of these groups.

By increasing the number of the mentioned groups present in a sensor array, inter alia, the accuracy and detection limit can be increased.

A further subject matter of the present invention are electronic noses which comprise the sensor arrays according to the present invention.

Such electronic noses basically are sensor arrays according to the present invention which have an area where the fluid to be analysed is contacted with the sensor array, a means for detecting the sensor output and a means for outputting said received sensor data.

Therefore, in embodiments of the present invention an electronic nose is encompassed, comprising

i) a means for receiving a fluid to be analysed and supplying the fluid to a detection region, wherein such a detection region can in preferred embodiments be a cavity,
ii) one or more sensor arrays according to the present invention which are arranged in that detection region and which are configured to come into contact with the fluid, and, accordingly, with the therein contained analyte(s),
iii) a means for receiving and evaluating the sensor data generated from that contact,
iv) a means for outputting the received and evaluated data,
v) optionally a device for storing the received and evaluated data.

In this context the means for receiving and evaluating the sensor data can be a detector that is operatively associated with each sensor in order to detect the presence of an analyte or analytes. The evaluation of the sensor data usually is done by comparing the sensor data to a library of response signatures to determine the particular analyte(s) in the fluid.

The means for outputting the received and evaluated data can be any means that is suitable to somehow communicate the information to the user. Usual means would be monitors or printers. Other means for outputting the data could also be in certain embodiments acoustic devices which upon detection of one or more analyte sound an acoustic signal so that the user is informed that such an analyte is detected; similarly, simple optical devices like blinking lamps could be used as well. The exact device for outputting the data

However, in the present invention it is possible to not only qualitatively detect the analyte(s) but also to quantify the amount of analyte(s) present.

Therefore, it is preferred to not only outputting the received and evaluated data but also to store the data, particularly on electrical storage devices.

The gathered data then can also be used to improve the already stored library of response signatures in order to increase the detection accuracy and detection limit further. In preferred embodiments, this is done by machine learning and/or artificial intelligence programs.

It is a further subject matter of the present invention to provide a process for detecting and discriminating enantiomeric substances or mixtures comprising or consisting of the enantiomeric substances.

According to the present invention such a process preferably comprises

I) providing a substance or substance mixture,
IIa) passing the substance or substance mixture over a sensor array according to the present invention, or
IIb) applying the substance or substance mixture to an electronic nose according to the present invention,
III) evaluating the sensor signals, preferably with an algorithm, more preferably with an artificial intelligence or machine learning algorithm, particularly preferably with a k-nearest algorithm,
IV) outputting and/or storing of the result of evaluating step III).

The sensor arrays of the present invention as well as the electronic noses of the present invention or even the process according to the present invention can be applied to a vast number of enantiomeric substances and substance mixtures. As the substances adhere to the different sensor units of the present invention differently, that is they adhere differently to chirMOF1, chirMOF2, chirMOF3, achirMOF1, achirMOF2, and achirMOF3, they lead to different sensor signals which can then be detected and (depending on the size of the substance library used for evaluation) from the sensor signals the substances be identified and quantified with very high accuracy.

It was found that the sensor arrays and the electronic noses of the present invention as well as the process according to the present invention are particularly well suited to analytes selected from the group consisting of *R*-limonene, *S*-limonene, *R*-1-phenylethanol, *S*-1-phenylethanol, *R*-1-phenylethylamine, *S*-1-phenylethylamine, *R*-2-octanol, *S*-2-octanol, methyl(*R*)-lactate, methyl(*S*)-lactate as well as mixtures thereof. Particularly, with the present invention it is possible to detect and distinguish the enantiomeric couples and the respective R- from the S-enantiomers. Thus, according to the present invention *R*-limonene can be detected and distinguished both qualitatively and quantitatively from *S*-limonene and from the other compounds. The same goes for the other mentioned enantiomeric couples.

Also, a mixture containing all the above mentioned compounds can be detected, evaluated and the respective compounds distinguished from one another both quantitatively as well as qualitatively.

The accuracy obtainable with the present invention with respect to specifically these compounds is very high and can reach levels of 95% or even higher, for example accuracies of over 97%.

Further, it is a subject matter of the present invention to use the sensor array according to the present invention or the electronic noses according to the present invention for the detection and discrimination of substances.

Preferably the substances (analytes) to be detected and discriminated when using the sensor arrays according to the present invention or the electronic noses according to the present invention are selected from the group consisting of *R*-limonene, *S*-limonene, *R*-1-phenylethanol, *S*-1-phenylethanol, *R*-1-phenylethylamine, *S*-1-phenylethylamine, *R*-2-octanol, *S*-2-octanol, methyl(*R*)-lactate, methyl(*S*)-lactate and mixtures thereof.

Particularly, the sensor arrays and the noses according to the present invention are used to detect and discriminate enantiomeric substances and substance mixtures selected from the group consisting of *R*-/*S*-limonene, *R*-/*S*-1-phenylethanol, *R*-/*S*-1-phenylethylamine, *R*-/*S*-2-octanol, methyl(*R*/*S*)-lactate as well as mixtures thereof.

The present invention thus also provides, inter alia, an enantioselective e-nose, which is based on quartz-crystal microbalance (QCM) sensors coated with six different nanoporous enantiopure and achiral metal-organic framework (MOF) thin films. The MOF thin films are preferably directly prepared on the QCM sensors in a layer-by-layer fashion, resulting in surface-mounted MOFs (SURMOFs). While the sensors with the achiral MOF structures show identical responses for both isomers and can only distinguish the different molecules, the sensors coated with the enantiopure MOF structures can enantioselectively distinguish the chiral molecules. By machine learning algorithms, particularly ones based on k-nearest-neighbor (kNN) analysis, the sensor arrays of the present invention can be used to discriminate molecules and their isomers with very high accuracy. In some embodiments the discrimination is presented with 97.4% confidence or more.

The underlying principle of the present invention is that at least one analyte is led to or over the sensors, preferably QCM-SURMOF sensors, of the present invention and then the analyte adheres to (at least) one of the structures, depending on the respective molecular structures of analyte and SURMOF. The sensor-analyte aggregate, preferably QCM-SURMOF-analyte-aggregate, then, obviously, has a higher mass then the sensor had before.

The response of each QCM sensor, which is the frequency shift of the resonance frequency, is proportional to the mass change caused by the molecular uptake. Thus it is possible to detect single analytes led over the sensors of the present invention.

However, with the present invention it is also possible to detect and discriminate several analytes simultaneously.

When the QCM-SURMOF-array is exposed to the different odour molecules, the frequency shift of each sensor is recorded simultaneously.

The response of the *achiral* SURMOFs is essentially identical for both isomers of a given species, particularly for *R*-limonene and *S*-limonene or *R*-1-phenylethanol and *S*-1-phenylethanol or *R*-1-phenylethylamine and *S*-1-phenylethylamine or *R*-2-octanol and *S*-2-octanol or methyl (*R*)-lactate and methyl (*S*)-lactate. This means that the molecules can be distinguished but, as expected, these sensors cannot distinguish the enantiomers. The sensor responses for the *R*- and *S*-enantiomers average only show a difference of 2.1%.

On the other hand, the sensors coated with the *enantiopure* MOF films show clear differences between the enantiomers of the respective same molecule.

The radar plots for the respective molecules at different concentrations also allow a clear enantioselective discrimination of the chiral molecules.

In preferred embodiments of the present invention, the sensor array shows an essential linear response in the investigated concentration range of roughly from 1 to 1000 ppm, in particularly preferred embodiments even beyond that range.

Since all isomers of the odour molecules have characteristic patterns on the radar plots, their identification is possible with the present invention. In one embodiment of the present invention, to that end a substance library with comparative data and plots of calibration-substances as well as already investigated substances is established. With the e-nose being calibrated, with one or more of these substances, or otherwise, the e-nose can detect and identify a huge variety of different molecules.

Accordingly, the sensor arrays of the present invention are very well suited for detecting and discriminating analytes selected from the group consisting of *R*-limonene, *S*-limonene, *R*-1-phenylethanol, *S*-1-phenylethanol, *R*-1-phenylethylamine, *S*-1-phenylethylamine, *R*-2-octanol, *S*-2-octanol, methyl (*R*)-lactate, methyl (*S*)-lactate and mixtures thereof.

Therefore, one preferred employment of the sensors according to the present invention is as or in electronic noses.

Some preferred e-noses according to the present invention comprise or consist of six quartz crystal microbalance (QCM) sensors coated with SURMOFs of six different structures, which are three enantiopure and three achiral structures.

The enantiopure SURMOFs in this context are preferably $Cu_2(DCam)_2(dabco)$, $Cu_2(DCam)_2(BiPy)$ and $Cu_2(DCam)_2(BiPyB)$, denoted as chirMOF1, chirMOF2 and chirMOF3. DCam, which is D-camphoric acid, is the enantiopure layer linker in these pillared-layer MOF structures. The pillar linkers are diazabicyclo[2.2.2]octane (dabco), 4,4'-bipyridyl (BiPy) and 1,4-bis(4-pyridyl)benzene (BiPyB), respectively.

In alternatives of the invention, prior to SURMOF synthesis, the, preferably gold-coated, QCM substrates are functionalized in order to provide a [001] crystal orientation of the SURMOF perpendicular to the substrate surface.

The MOF thin films are then prepared in a layer-by-layer fashion.

The achiral SURMOF samples are prepared by alternatively exposing the substrate to the metal node and to the linker solutions, preferably using a spray coating method. In preferred embodiments, the samples are prepared in 10 to 50, preferably 20 to 40, particularly 30 synthesis cycles.

The achiral SURMOFs are preferably HKUST-1, Cu(BDC) and Cu(BPDC), denoted achirMOF1, achirMOF2 and achirMOF3, respectively, where BDC is benzene-1,4-dicarboxylate and BPDC is biphenyl-4,4'-dicarboxylate, all three of which are commercially available.

The e-noses according to the present invention are particularly suited for the detection and discrimination of the following five pairs of chiral odour molecules: *R*-and *S*-limonene, *R*- and *S*-2-octanol, *R*- and *S*-1-phenylethanol, *R*- and *S*-1-phenylethylamine and methyl (*R*/*S*) lactate, that means 10 volatile organic compounds (VOCs) in total.

The application range of the sensor arrays of the present invention and the enantioselective e-nose of the present invention is very wide, ranging from sensing of bioactive chiral pheromones, e.g. to measure and inhibit the communication between infesting insects, over examining product piracy, e.g. of chiral perfumes and aromas, to quality control of food.

Preferred enantiopure and achiral MOFs of the present invention are denoted as:

- $Cu_2(DCam)_2(dabco)$ - chirMOF1,
- $Cu_2(DCam)_2(BiPy)$ - chirMOF2,
- $Cu_2(DCam)_2(BiPyB)$ - chirMOF3,
- HKUST-1 - achirMOF1,
- Cu(BDC) - achirMOF2, and
- Cu(BPDC) - achirMOF3.

Accordingly, one particularly preferred embodiment of the present invention is a QCM sensor array coated with different enantiopure and achiral MOF thin films which works as an electronic nose, able to enantioselectively distinguish chiral odour molecules. The e-nose of the present invention, when employed to five pairs of chiral odour molecules being *R*- and *S*-limonene, *R*- and *S*-2-octanol, *R*- and *S*-1-phenylethanol, *R*-and *S*-1-phenylethylamine and methyl (*R*/*S*) lactate, showed very high detection accuracy.

The chiral region of the sensors of the present invention comprises a chiral resolving MOF structure. The chiral region preferably is a enantiopure MOF region, or both an enantiopure region and an achiral region.

In order to correctly assign and quantify the sensor data of the enantioselective sensors according to the present invention, or the e-noses of the present invention, the data from the sensor array is analysed, preferably by a machine learning algorithm.

Particularly the machine learning algorithm is a k-nearest neighbor (kNN) algorithm. Then, the sensor data is grouped according to the kNN analysis.

In the k-NN classification, a set X of n points and a distance function, k-NN searches the k closest points in X to the set of selected points. The number of nearest neighbours should be specified during the k-NN classification. The distance weight can also be specified with the distance weighting function such as equal (without weight function), inverse (weight is 1/distance), squared inverse (weight is 1/distance2), cosine or cubic etc. This is known to the person skilled in the art and does not need to be elaborated on in more detail.

When, in preferred embodiments, a calculated confusion matrix is applied to the data achieved with the present invention it shows that the response of all odours can be distinguished.

With the present invention it is possible to discriminate most enantiomers with essential perfect accuracy. More particularly, with the present invention it is possible to distinguish enantiomers, particularly selected from the group consisting of *R*-limonene, *S*-limonene, *R*-1-phenylethanol, *S*-1-phenylethanol, *R*-1-phenylethylamine, *S*-1-phenylethylamine, *R*-2-octanol, *S*-2-octanol, methyl(*R*)-lactate, methyl(*S*)-lactate and mixtures thereof with an average confidence of enantioselectively being 97.4%. That means with the present invention, a very high precision for detection and discrimination is realized.

The most preferred sensor according to the present invention is a quartz-crystal microbalance sensor.

The following sensors and sensor structures are also disclosed:

- fibre optical sensors and surface acoustical wave sensors;
- solid state detectors, preferably ultra-violet, visible and near infrared radiation microsensors, particularly as photoconductive cells, photodiodes, phototransistors;
- mechanical sensors, preferably displacement microsensors, capacitive and inductive displacement sensors, optical displacement sensors, ultrasonic displacement sensors, surface acoustic wave resonant devices;
- chemical or biochemical sensors, preferably metal oxide gas sensors, particularly tin oxide gas sensors, organic gas sensors, particularly inorganic Schottky devices, metal oxide field-effect transistor (metal oxide semiconductor field-effect transistor = MOSFET), electrochemical cell sensors, infrared sensors, surface plasmon sensors;
- sintered metal oxide sensors, phthalocyanine sensors, conducting polymer sensors, lipid coating sensors and metal FET (field-effect transistor) structures;
- metal oxide sensors, preferably as catalytic gas sensors, organic semiconducting gas sensors, solid electrolyte gas sensors, Langmuir-Blodgett films.

In the context of the present invention it is possible to combine different sensors in one e-nose, e.g. one or more QCM sensors and one or more of the other mentioned sensors. In one embodiment an array of QCM sensors is combined with one or more arrays based on other sensors.

In this way, it is possible to even further enhance the accuracy of the e-noses according to the present invention.

The term "chiral" is used in the present invention to refer to an optically active or enantiomerically pure (enantiopure) compound, or to a compound containing one or more asymmetric centres in a well-defined optically active configuration.

A further subject matter of the present invention is a portable setup for an e-nose according to the present invention. This setup comprises a first mixing vessel, which can basically be any vessel that allows a sample to be inserted and mixed therein, e.g. it can be in the form of a glass vial. The sample containing the odour molecules to be detected/examined is added into that mixing vessel. The addition can be done by any means capable of transferring the sample. As this setup is to be portable, a preferred device for adding the sample is a syringe. In the mixing vessel it is possible to control the odour concentration and the sample can be evaporated by heating, preferably with a heating device like a resistive bulb heater. The evaporated gas then flows along a feed line, which can be any gastight line or tube to a sensor array according to the present invention. Typically, in such a setup, the sensor array is present in in a housing with a sufficient size, for example a 3D-printed one, preferably along with a humidity/temperature sensor, and a frequency counter; of course, the necessary electronics, e.g. printed circuit boards or the like, are present in that housing as well. Basically the housing has the function to protect the sensor array as well as the other components and to make them easily manageable. The housing has a gas inlet to which the feed line is connected and a gas outlet which enables the flow of the gas through the housing. The gas outlet is connected to the return line, along which the gas flows back to the mixing vessel. The circulation of the gas flow is preferably facilitated by a pump, like a diaphragm pump. In this setup, the feed line and the return line both feature valves, preferably three-way valves. After a gas has flown trough the sensor array, the one valve can be put in a position that the path between the housing and the mixing vessel (as well as pump) is blocked and the other valve can be put into a position that the feed line is blocked between the mixing vessel and the housing. Then nitrogen gas can be fed into the lines and purge the volume between the two valves. The nitrogen can be provided by a stationary nitrogen supply line or by transportable gas bottles, depending on what is available at the location where measurement is desired; therefore, in this portable setup usually a gas bottle is sued. Depending on the orientation of the valves, either the side of the mixing vessel or the side of the sensor array can be purged, thus enabling easy cleaning of the portable e-nose setup before another test is done. It is preferred for this portable setup that the sensor array is additionally covered by a head space of sufficient size in order to minimize the volume the gas has to flow through, to ensure sufficient contact of the gas with the sensors and also to protect the electronic parts from the gas. The set-up is in the form of a closed loop tubing. The housing preferably has interfaces to attach a computer to it, for example via USB, though it is also possible to provide the internal electronics with wireless connectivity. The computer, usually a common personal computer but may be even a smartphone (in both instances with a software to interpret the sensor data), can therefore be attached to the housing and the sensor array in order to facilitate analysis and evaluation of the sensor data. However, if only qualitative evaluation whether a certain compound is present in the sample is intended, it is also possible to provide the housing with a simple indicator like a light, especially an LED-light (diode) and not use a computer. This setup is especially suitable for faster measurements on location.

It is even possible to further simplify this setup to a two-part embodiment by providing a detection part comprising a housing basically as described above and a sample-part comprising a housing in which a mixing vessel, a feed line, a return line, both with valves, preferably three-way valves, and a pump are arranged in and connected to the housing. Thus a further subject matter of the present invention is a portable detection kit for the detection and enantioselective discrimination of chiral substances, preferably selected from the group consisting of R-limonene, S-limonene, R-1-phenylethanol, S-1-phenylethanol, R-1-phenylethylamine, S-1-phenylethylamine, R-2-octanol, S-2-octanol, methyl (R)-lactate, methyl (S)-lactate and mixtures thereof, particularly enantiomeric substances, more particularly enantiomeric substances selected from the group consisting of R-/S-limonene, R-/S-1-phenylethanol, R-/S-1-phenylethylamine, R-/S-2-octanol, methyl (R/S)-lactate and mixtures thereof, comprising

A) a first sample housing comprising in its interior

A1) a gastight mixing vessel configured to allow a sample to be added into it, preferably via a syringe through a septum, the vessel comprising a heating device and optionally a mixing device,
the vessel being connected to the housing such that sample addition is possible without opening the housing, preferably such that a septum of the vessel is accessible from the outside,
A2) a feed line through which evaporated sample gas can flow away from the mixing vessel, the feed line comprising a valve, preferably a three-way valve, wherein the line is connected to the mixing vessel and an adapter arranged at a wall of the housing,
A3) a return line through which analysed sample gas can flow to the mixing vessel, the return line comprising a valve, preferably a three-way valve, and optionally a pump, preferably a diaphragm pump, wherein the line is connected to an adapter arranged at a wall of the housing and the mixing vessel, the pump, if present, being arranged between the valve and the mixing vessel,
A4) either a current adapter or at least one primary or secondary battery to provide current for the mixing device, if present, the heating device and the pump, if present,

B) a second detection housing comprising

B1) at least one sensor array according to the present invention, along with the necessary electronics,
B2) optionally at least one frequency counter along with the necessary electronics,
B3) either at least one adapter for wire based connection to a computer or at least one wireless connectivity device, or another indicator configured to indicate the presence of a given compound upon receiving the corresponding signal from the sensor array,
B4) either a current adapter or at least one primary or secondary battery to provide current for the sensor array along with the electronics, the frequency counter along with the electronics and the pump, if present,

C) further material comprising at least one syringe, optionally a portable nitrogen bottle, optionally connection tubes, pipes or lines for connecting the housings to each other, optionally computer adapter cables,

wherein
the two housings are connectable to each other via tubes or lines or pipes to be connected to adapters in the walls of the respective housings or directly via housing-adapters configured to fit directly with each other, for example via male/female-connectors, especially click connectors.

The kit and the respective part may comprise further parts that are immediately apparent to those of ordinary skill in the art.

Of course, still a further subject matter of the present invention is a device which incorporates the parts of the kit in an already assembled matter or an assembled device which comprises the respective parts, though the parts themselves were not originally configured to be kit parts.

Figure 1 is a schematic description of the invention and illustrates schematically two dimensional representations of an embodiment of the Invention.

Figure 2 are sketches of chiral (top) and achiral (bottom) MOF structures coating QCM sensors of an e-nose and schematically illustrate two dimensional representations of an embodiment of molecular configurations of 4 building blocks: Sketches of the chiral (top) and achiral (bottom) MOF structures coating the QCM sensors of the e-nose. The term chirMOF1 denotes $Cu_2(DCam)_2(dabco)$, chirMOF2 is $Cu_2(DCam)_2(BiPy)$, chirMOF3 is $Cu_2(DCam)_2(BiPyB)$, achirMOF1 is HKUST-1, achirMOF2 is Cu(BDC) and achirMOF3 is Cu(BPDC).

Figures 3a to 3d are graphs showing the QCM data of the uptake of the mentioned enantiopure molecules as function of time, wherein each time two graphs are shown, one relating to the achiral structures and the other to the chiral structures.

Figures 4a to 4f are graphs showing the QCM data of the uptake of the mentioned enantiopure molecules as function of time, wherein each time two graphs are shown, one relating to the achiral structures and the other to the chiral structures.

Figures 5a to 5e are Radar plots of the sensor response to the exposure of some chiral volatile molecules: a) R- and S-limonene, b) R- and S-2-octanol, c) R- and S-1-phenylethanol d) R- and S-1-phenylethylamine and e) methyl R- and S-lactate. The R-enantiomers are plotted with symbol solid squares, S-enantiomers are plotted with symbol open circles. The concentration is 10 ppm. The molecular structure of the R- and S-enantiomers are shown below the radar plots.

Figure 6 is a confusion matrix of the discrimination of the isomers of the odour molecules. Squares having bold borders and having values given in them are the

Of course, still a further subject matter of the present invention is a device which incorporates the parts of the kit in an already assembled matter or an assembled device which comprises the respective parts, though the parts themselves were not originally configured to be kit parts.

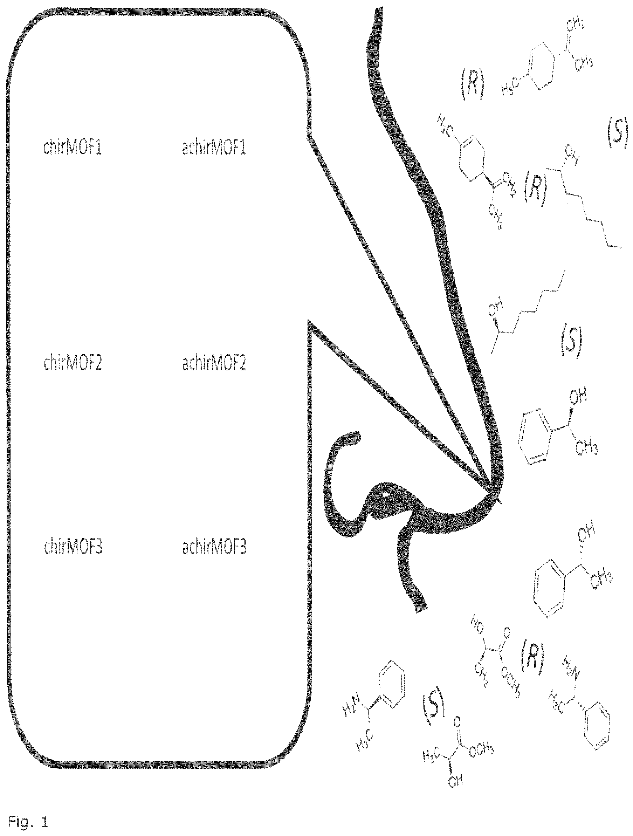

Figure 1 is a schematic description of the invention and illustrates schematically two dimensional representations of an embodiment of the Invention.

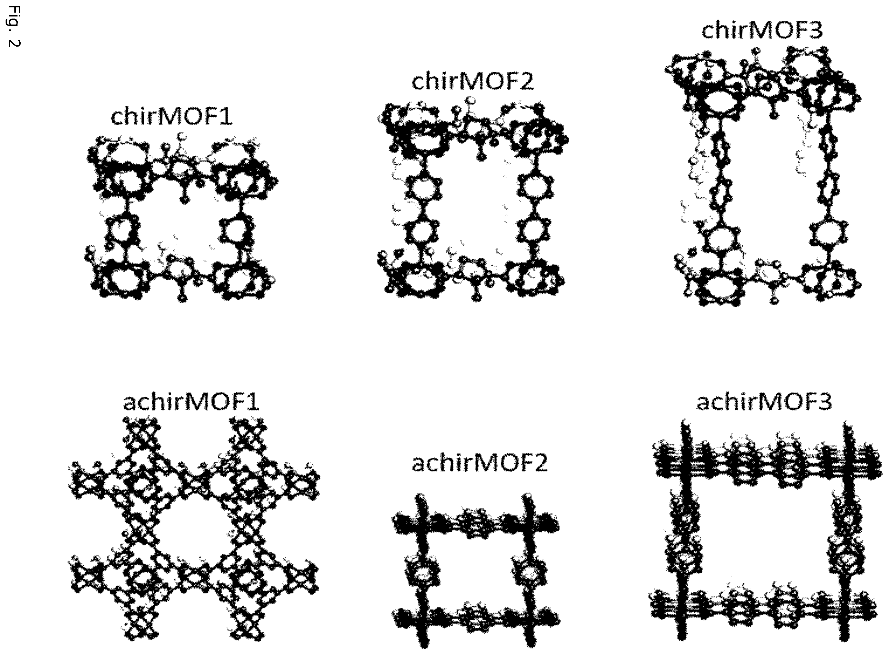

Figure 2 are sketches of chiral (top) and achiral (bottom) MOF structures coating QCM sensors of an e-nose and schematically illustrate two dimensional representations of an embodiment of molecular configurations of 4 building blocks: Sketches of the chiral (top) and achiral (bottom) MOF structures coating the QCM sensors of the e-nose. The term chirMOF1 denotes $Cu_2(DCam)_2(dabco)$, chirMOF2 is $Cu_2(DCam)_2(BiPy)$, chirMOF3 is $Cu_2(DCam)_2(BiPyB)$, achirMOF1 is HKUST-1, achirMOF2 is Cu(BDC) and achirMOF3 is Cu(BPDC).

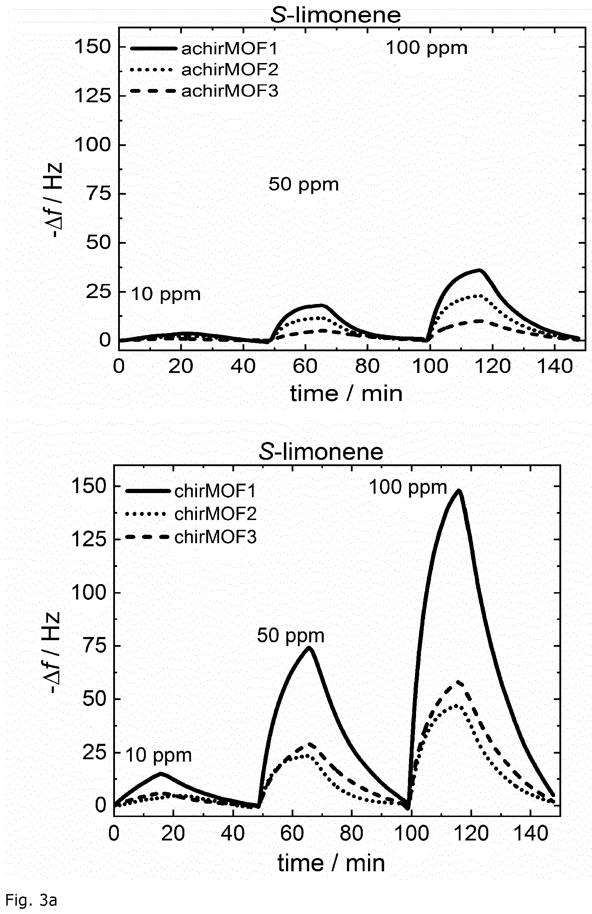

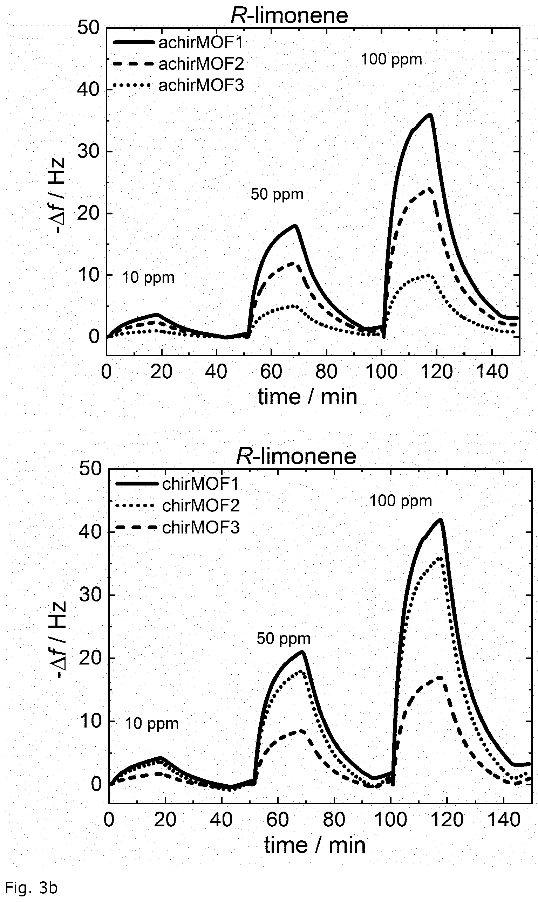

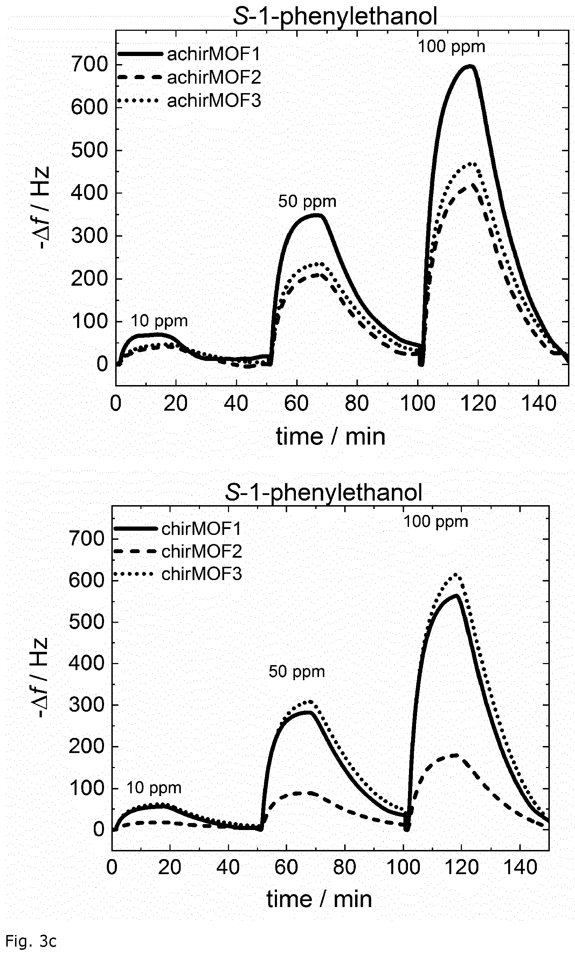

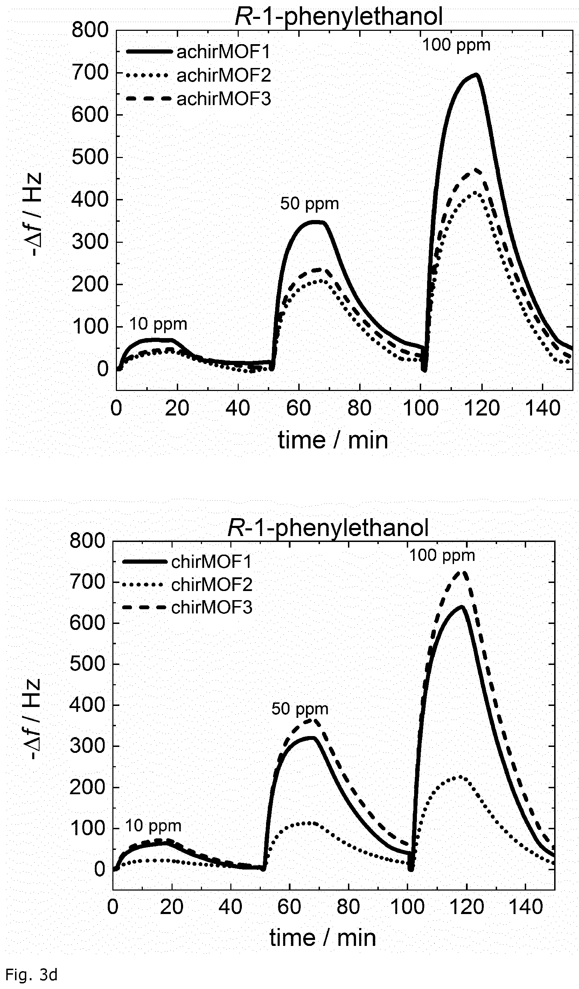

Figures 3a to 3d are graphs showing the QCM data of the uptake of the mentioned enantiopure molecules as function of time, wherein each time two graphs are shown, one relating to the achiral structures and the other to the chiral structures.

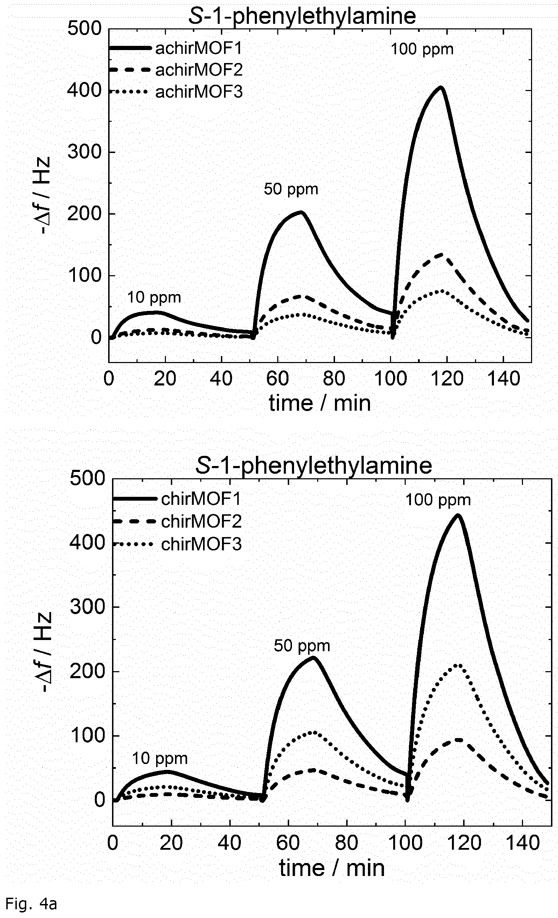

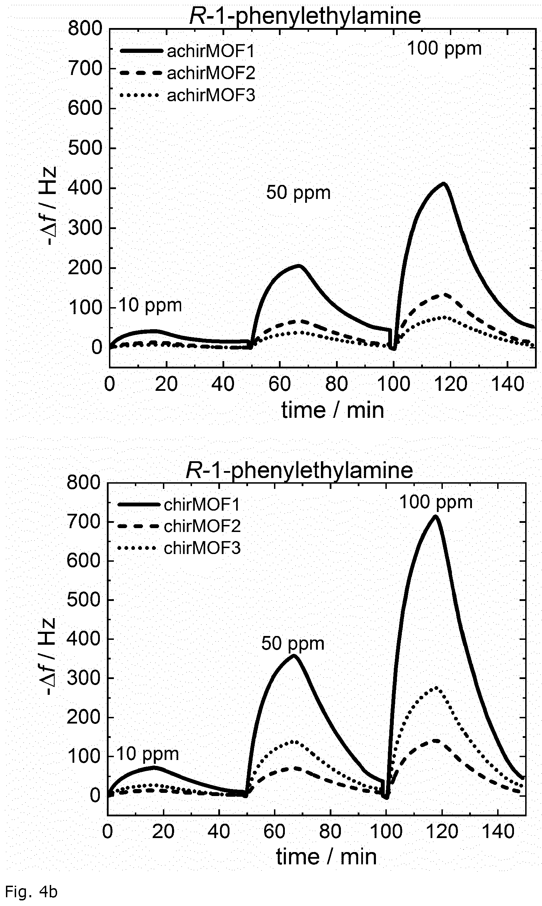

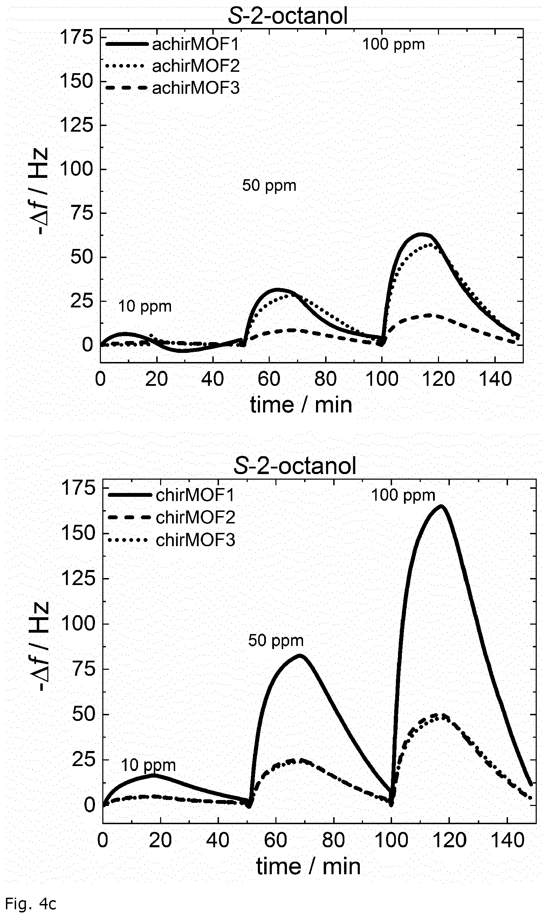

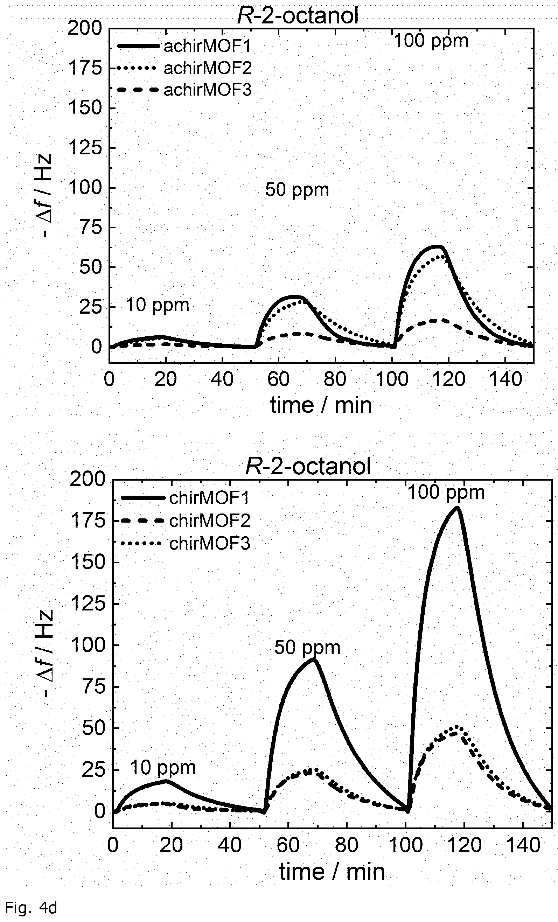

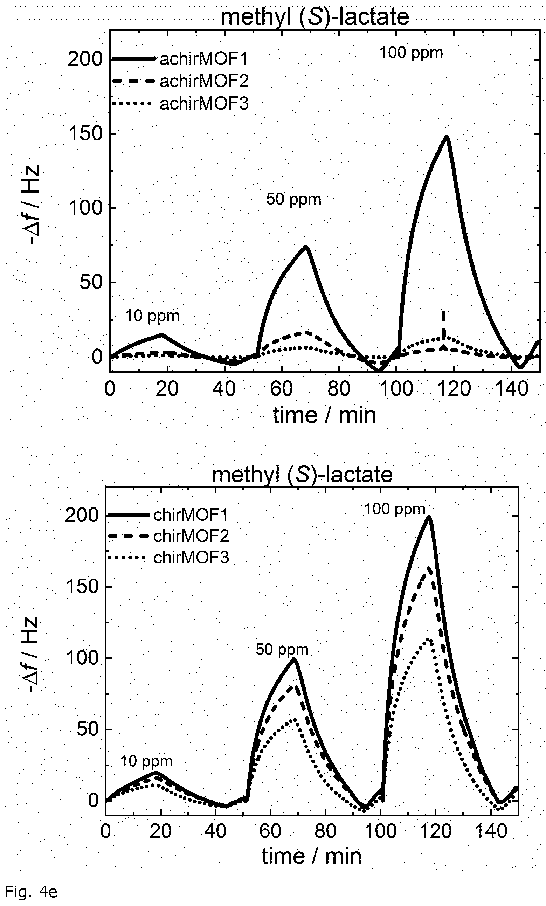

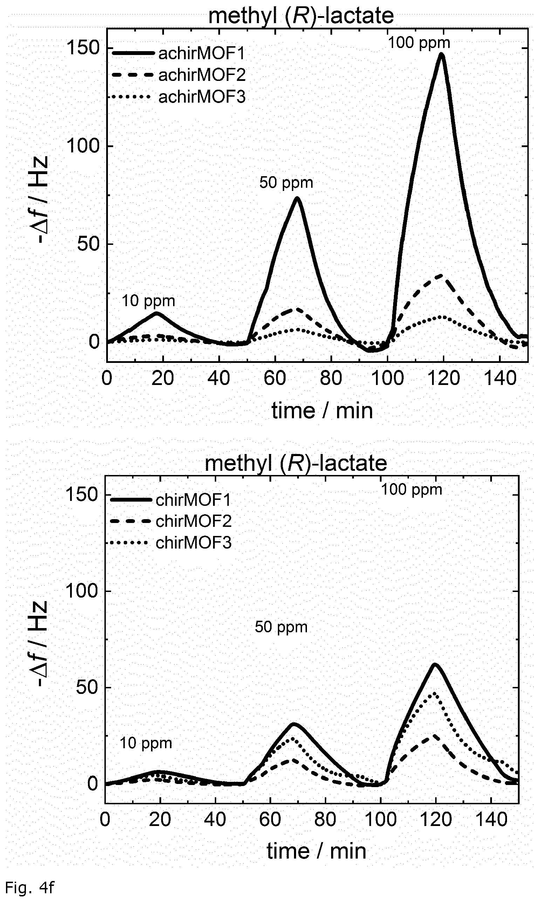

Figures 4a to 4f are graphs showing the QCM data of the uptake of the mentioned enantiopure molecules as function of time, wherein each time two graphs are shown, one relating to the achiral structures and the other to the chiral structures.

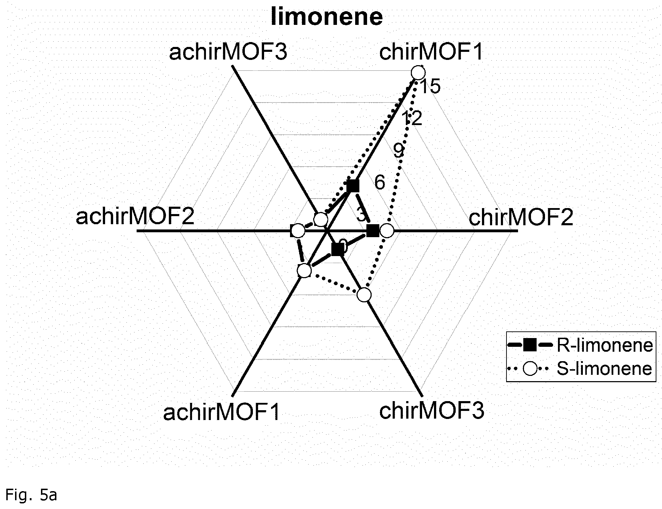

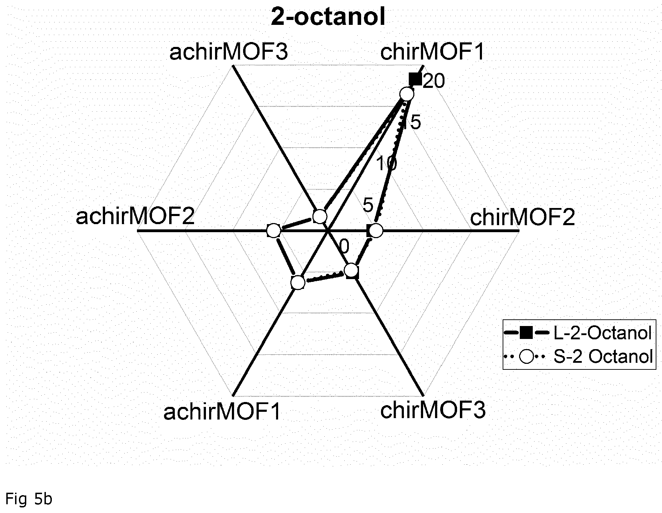

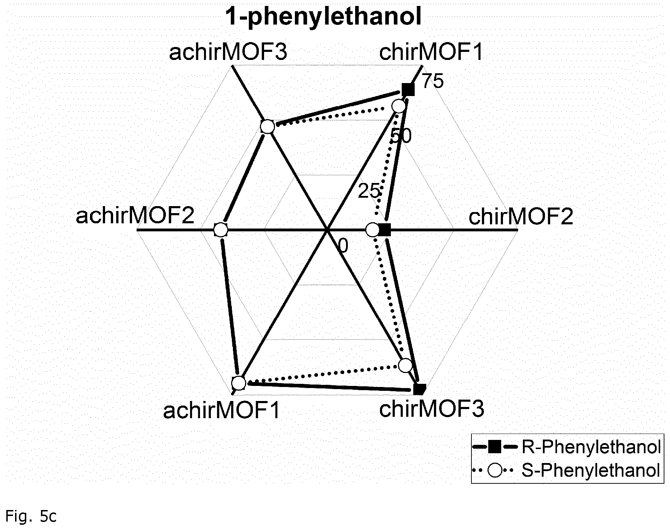

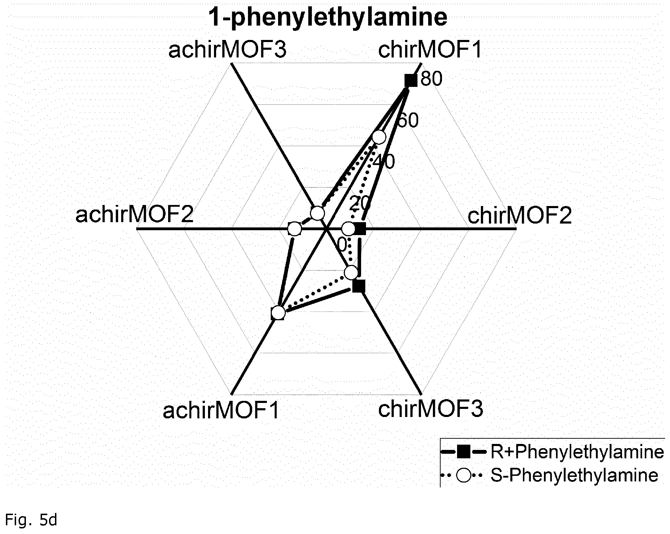

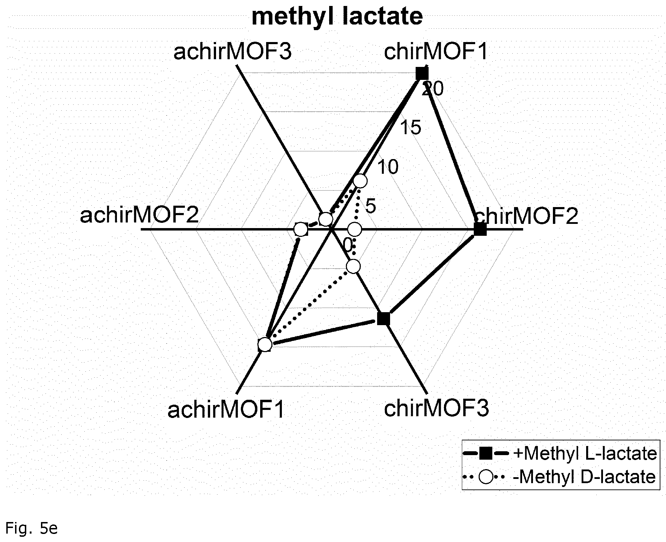

Figures 5a to 5e are Radar plots of the sensor response to the exposure of some chiral volatile molecules: a) R- and S-limonene, b) R-and S-2-octanol, c) R- and S-1-phenylethanol d) R- and S-1-phenylethylamine and e) methyl R- and S-lactate. The R-enantiomers are plotted with symbol solid squares, S-enantiomers are plotted with symbol open circles. The concentration is 10 ppm. The molecular structure of the R-and S-enantiomers are shown below the radar plots.

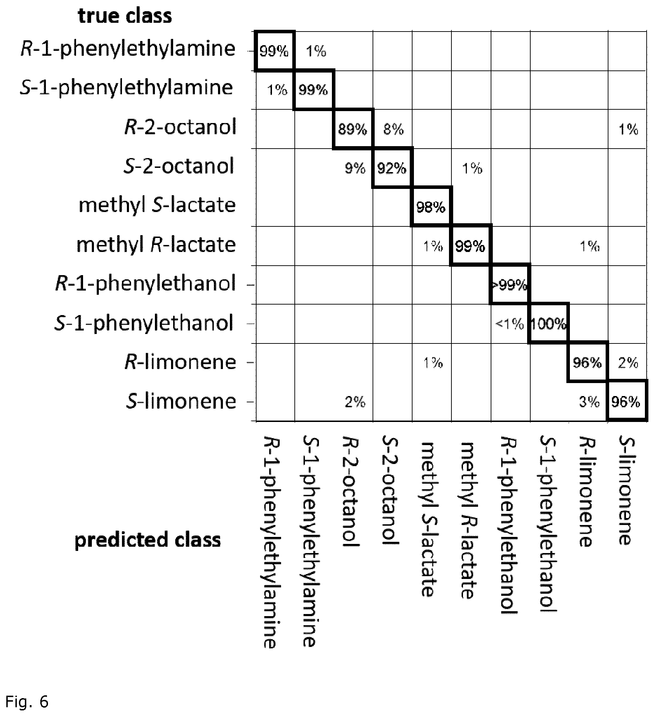

Figure 6 is a confusion matrix of the discrimination of the isomers of the odour molecules. Squares having bold borders and having values given in them are the correct predictions, squares with values in them but not having bold borders are the false predications obtained with the k-NN algorithm.

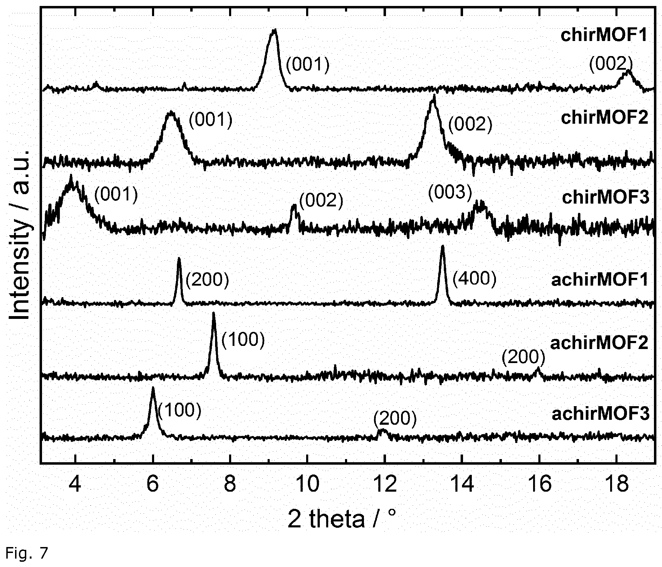

Figure 7 are X-ray diffractograms of the MOF thin films. The MOF names as well as the diffraction peaks are labelled. These X-ray diffractograms show that all samples are crystalline and have the targeted MOF structures. In addition, the diffraction patterns show that the samples are grown in an oriented way on the substrate. In detail, the chiral pillared-layer SURMOFs are grown in (001) orientation and the achiral SURMOFs are grown in (100) orientation perpendicular to the substrate.

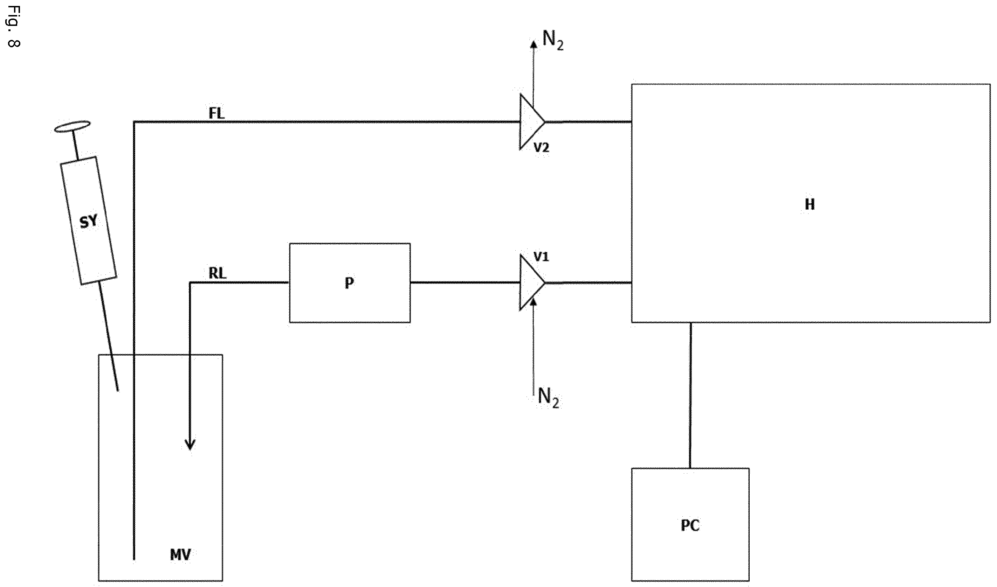

Figure 8 is a schematic illustration of a (portable) setup for an e-nose according to the present invention. The sample containing the odour molecules to be detected/examined is added into a mixing vessel MV, which e.g. is in the form of a glass vial. The addition can be done by any means capable of transferring the sample and is illustrated here with a syringe SY. In this mixing vessel MV odour concentration control is possible and the sample is evaporated by heating, preferably with a heating device like a resistive bulb heater (not shown). The evaporated gas then flows along the feed line FL to a sensor array according to the present invention. The sensor array, preferably along with a humidity/-temperature sensor, and a frequency counter are placed (together with the respective necessary electronics, e.g. printed circuit boards) in a housing H with a sufficient size, for example a 3D-printed one. The housing has a gas inlet to which the feed line FL is connected and a gas outlet which enables the flow of the gas through the housing . The gas outlet is connected to the return line RL, along which the gas flows back to the mixing vessel MV. The circulation of the gas flow is preferably facilitated by a pump P, like a diaphragm pump. As shown in the figure, the feed line FL and the return line RL both feature valves V1 and V2, preferably three-way valves. After a gas has flown trough the sensor array, the valve V1 can be put in a position that the path between the housing H and the mixing vessel MV (as well as pump P) is blocked and the other valve V2 can be put into a position that the feed line FL is blocked between the mixing vessel MV and the housing H. Then nitrogen gas can be fed into the lines and purge the volume between V1 and V2; depending on the orientation of the valves, either the side of the mixing vessel or the side of the sensor array can be purged, thus enabling easy cleaning of the portable e-nose setup before an other test is done. It is preferred that the sensor array is additionally covered by a head space of sufficient size (not shown) in order to minimize the volume the gas has to flow through, to ensure sufficient contact of the gas with the sensors and also to protect the electronic parts from the gas. Additionally, as illustrated in this figure, a computer, in this case a personal computer PC, can be attached to the housing H and the sensor array in order to facilitate analysis and evaluation of the sensor data. This setup is especially suitable for faster measurements on location.

The invention is now described in more detail with reference to the following non-limiting examples. The following exemplary, non-limiting examples are provided to further describe the embodiments presented herein.

Examples:

Example 1:

The MOF thin films were prepared in a layer-by-layer fashion, following previously optimized synthesis descriptions.

The achiral SURMOF samples were prepared by alternatively exposing the substrate to the metal node and to the linker solutions, using a spray method.

The HKUST-1 MOF film was prepared from ethanolic 1 mM copper acetate and ethanolic 0.2 mM trimesic acid (BTC) solutions.

Cu(BDC) was prepared from ethanolic 1 mM copper acetate and ethanolic 0.2 mM terephthalic acid (BDC) solutions.

Cu(BPDC) was prepared from ethanolic 1 mM copper acetate and ethanolic 0.2 mM biphenyl dicarboxylic acid (BPDC) solutions.

An isoreticular series of enantiopure pillared-layer MOFs of type $Cu_2(Dcam)_2(L)$ with identical chiral (1*R*,3*S*)-(+)-camphoric acid (Dcam) layer linker and different pillar linkers L were prepared. An illustrative representation of such structures is given in figure 2.

The pillar linkers L were N-donor ligands of type diazabicyclo[2.2.2]octane (dabco), 4,4'-bipyridyl (BiPy) and 1,4-bis(4-pyridyl)benzene (BiPyB), respectively. They were coordinated to the axial positions of the copper complexes, and formed pillars of different length, perpendicular to the chiral $Cu_2(Dcam)_2$ layers.

All samples were prepared in 30 synthesis cycles.

Prior to SURMOF synthesis, all gold-coated QCM substrates were functionalized with 11-mercapto-1-undecanol (MUD) self-assembled monolayers (SAMs), resulting in a [001] crystal orientation of the SURMOF perpendicular to the substrate surface.

Example 2:

The crystallinity of the MOF samples with the targeted structure was investigated by X-ray diffraction, using a Bruker D8 Discovery with a wavelength of 0.154 nm.

The X-ray diffractograms are given in figure 7.

The lattice distances of the MOF samples were 0.95 nm in [100] and [010] direction as well as 0.95 nm, 1.4 nm and 1.8 nm in [001] direction for the $Cu_2(Dcam)_2(dabco)$, $Cu_2(Dcam)_2(BiPy)$ and $Cu(Dcam)_2(BiPyB)$ MOFs, respectively. This corresponds to pore sizes of roughly 0.7 nm in [100] and [010] directions and roughly 0.4 nm, 0.8 nm and 1.2 nm, respectively, in [001] direction.

Example 3:

Then the prepared sensor arrays were tested as e-noses for five pairs of chiral odour molecules, namely *R*- and *S*-limonene, *R*- and *S*-2-octanol, *R*- and *S*-1-phenylethanol, *R*- and *S*-1-phenylethylamine and methyl (*R/S*) lactate.

Example 3a:

For that, a home-built setup of a 3-channel e-nose system as well as the gas delivery system with a micro-litre syringe pump for odours concentration control was used: A stainless steel cylindrical test cell with a volume of 34 litres has been kept at a constant temperature of $(30 \pm 1)°C$ to prevent condensation of gas molecules on the wall of the test chamber. The odours to be analysed were evaporated at 60°C with a 20 W resistive bulb heater inside the test chamber during the injection. For the concentration variation of the chiral molecules (10 ppm, 50 ppm and 100 ppm), a 100 $\mu$l Hamilton Syringe (710 SN) installed to a syringe pump (LA-30 model, Landgraf Laborsysteme) was used for injection on the bulb heater inside the chamber to evaporate. A fan was located just under the bulb heater evaporator for a homogenous distribution of the evaporated gas. The sensor array and a humidity/temperature sensor were located close to centre of the test chamber. The syringe pump was calibrated and controlled with a software during the experiment.

The frequency shift of each quartz sensor with an AT-cut and a resonance frequency of 10 MHz was recorded. For the QCM data collection, 5 V/16 MHz ATMega32U4 microcontrollers and open source Pierce oscillator circuits designed by openQCM have been used (which are published for free on www.openqcm.com).

Three data sets were recorded per second. Temperature and humidity were measured with an Adafruit HTU21D-F sensor. The entire setup has been computer controlled with a self-written program code written in MATLAB.

The odours to be analysed were evaporated at 60°C during the injection into the test chamber with a bulb filament heater. Two valves with mass flowmeters were used to transfer the evaporated odorant gases through the test cell. A stainless steel cylindrical test cell with a volume of 34 litres has been kept at a constant temperature of $(30\pm1)°C$ to prevent condensation of gas molecules on the wall of the test chamber. The different volatile organic compounds with concentrations of 10 ppm, 50 ppm and 100 ppm have been injected sequentially into the sample evaporator inside the test cell with a computer-controlled microliter syringe (Hamilton Model 710 SN).

For the desorption/activation process, the test chamber was purged with dry air with a flow rate of 15 litres per minute for 30 minutes before introducing the evaporated gas samples. In the experiments, each cycle of concentration measurement consisted of 20 minutes for adsorption and 30 minutes for desorption, i.e. 50 minutes in total. The initial resonance frequency values of each sensor were determined at the beginning of the experiment as an average value of ten measurements. The shift in the resonance frequency due to the uptake of the targeted molecules was recorded as response of each sensor during the experiments.

The following table shows the data response in Hz of the individual sensors for the individual odour molecules.

| | limonene | | 2-octanol | | methyl lactate | | 1-phenylethylamin e | | 1-phenylethano l | |
|---|---|---|---|---|---|---|---|---|---|---|
| **10 ppm** | | | | | | | | | | |
| | R | S | R | S | R | S | R | S | R | S |
| chirMOF1 | 4.0 0 | 14.8 0 | 18.3 0 | 16.5 0 | 19.9 0 | 6.20 | 71.40 | 44.30 | 64.00 | 56.40 |
| chirMOF2 | 4.0 0 | 4.70 | 4.70 | 5.00 | 16.3 0 | 2.50 | 14.10 | 9.40 | 22.60 | 17.90 |
| chirMOF3 | 2.0 0 | 5.80 | 5.10 | 4.80 | 11.4 0 | 4.70 | 27.60 | 21.10 | 72.90 | 61.60 |
| achirMOF 1 | 4.0 0 | 3.60 | 6.30 | 6.30 | 14.8 0 | 14.7 0 | 41.10 | 40.50 | 69.70 | 69.60 |
| achirMOF 2 | 2.0 0 | 2.30 | 5.70 | 5.70 | 3.30 | 3.40 | 13.40 | 13.40 | 41.80 | 41.90 |
| achirMOF 3 | 1.0 0 | 1.00 | 1.70 | 1.70 | 1.30 | 1.30 | 7.60 | 7.50 | 47.10 | 47.00 |
| **50 ppm** | | | | | | | | | | |
| chirMOF1 | 20. 0 | 74.0 | 91.5 | 82.5 | 99.5 | 31.0 | 357.0 | 221.5 | 320.0 | 282.0 |
| chirMOF2 | 20. 0 | 23.5 | 23.5 | 25.0 | 81.5 | 12.5 | 70.5 | 47.0 | 113.0 | 89.5 |
| chirMOF3 | 10. 0 | 29.0 | 25.5 | 24.0 | 57.0 | 23.5 | 138.0 | 105.5 | 364.5 | 308.0 |
| achirMOF 1 | 20. 0 | 18.0 | 31.5 | 31.5 | 74.0 | 73.5 | 205.5 | 202.5 | 348.5 | 348.0 |
| achirMOF 2 | 10. 0 | 11.5 | 28.5 | 28.5 | 16.5 | 17.0 | 67.0 | 67.0 | 209.0 | 209.5 |
| achirMOF 3 | 5.0 | 5.0 | 8.5 | 8.5 | 6.5 | 6.5 | 38.0 | 37.5 | 235.5 | 235.0 |
| **100 ppm** | | | | | | | | | | |
| chirMOF1 | 40. 0 | 148. 0 | 183. 0 | 165. 0 | 199. 0 | 62.0 | 714.0 | 443.0 | 640.0 | 564.0 |
| chirMOF2 | 40. 0 | 47.0 | 47.0 | 50.0 | 163. 0 | 25.0 | 141.0 | 94.0 | 226.0 | 179.0 |
| chirMOF3 | 20. 0 | 58.0 | 51.0 | 48.0 | 114. 0 | 47.0 | 276.0 | 211.0 | 729.0 | 616.0 |
| achirMOF 1 | 40. 0 | 36.0 | 63.0 | 63.0 | 148. 0 | 147. 0 | 411.0 | 405.0 | 697.0 | 696.0 |
| achirMOF 2 | 20. 0 | 23.0 | 57.0 | 57.0 | 33.0 | 34.0 | 134.0 | 134.0 | 418.0 | 419.0 |
| achirMOF 3 | 10. 0 | 10.0 | 17.0 | 17.0 | 13.0 | 13.0 | 76.0 | 75.0 | 471.0 | 470.0 |

The change of the mass density (delta m) of the film on the surface depends linearly on the change on the resonance frequency of each respective sensor modified with enantiopure and achiral MOF films. The change was calculated by the Sauerbrey equation:

$$\Delta m = \frac{A\sqrt{\mu\rho}}{2f_0^2} \times \Delta f,$$

wherein $f_0$ denotes the resonance frequency of the fundamental mode of the QCM crystal, delta f is the frequency change, A is the surface area, the Greek letter rho represents the density of the crystal ($2.684$ g/cm$^3$) and $\mu$ is the shear modulus of quartz ($2.947\times10^{11}$ g* cm$^{-1}$s$^{-2}$)

The sensing data from the sensor array was analysed by a machine learning algorithm, namely a k-nearest neighbor (kNN) algorithm written in MATLAB.

During data analysis, more than 100 data points of the maximum resonance frequency shifts were used for the kNN classification. This made 1294 observation points. 10 folds cross-validation was used for the classification with 1165 observations for training sets and 264 observations for the test sets.

The kNN analysis showed that all sensor data can be grouped.

Example 3b:

Similar to the experimental setup in example 3a, a portable 6 channel e-nose setup with a closed loop tubing as shown in Figure 8 was used to obtain the interaction of odour molecules with the sensor array with chiral and achiral components. The sensor array and a humidity/temperature sensor were placed inside a 3D printed head space in a cylindrical form on the electronic card. The odour molecules were injected with an auto micro-litre syringe pump into a 100 mL glass vial for odours concentration control and evaporated with a 20 W resistive bulb heater inside up to 60C. The evaporated gas was then circulated through the sensor array inside the head space. The sensing head space was easily cleaned with nitrogen gas using valve 1 and valve 2 before another test to reset the background signal. This portable version of the e-nose system can be used to discriminate any other volatile molecules.

The results were similar to those described above for example 3a.

Example 4:

A calculated confusion matrix, also referred to as error matrix, which shows the likeliness of each correctly or falsely identified component was applied to the data. The confusion matrix showed that the response of all odours can be distinguished and that false prediction are very unlikely

The confusion matrix is shown in figure 6.

It showed that most enantiomers can be discriminated with essential perfect accuracy. In average, the confidence of enantioselectively distinguishing all ten isomers was 97.4%, meaning a very high precision for detection and discrimination was realized.

**Claims**

1. Sensor array comprising or consisting of

   A) at least one chiral metal-organic framework,
   B) at least one achiral metal-organic framework,
   wherein the metal organic frameworks are each coated onto at least one sensor substrate and the differently coated sensors form the array,
   **characterized in that** the sensor substrates are quartz-crystal microbalance sensors.

2. Sensor array according to claim 1, **characterized in that** the sensor substrates are

   I) combined with one or more sensors selected from the group consisting of

      - fibre optical sensors and surface acoustical wave sensors;
      - solid state detectors, preferably ultra-violet, visible and near infrared radiation microsensors, particularly as photoconductive cells, photodiodes, phototransistors;
      - mechanical sensors, preferably displacement microsensors, capacitive and inductive displacement sensors, optical displacement sensors, ultrasonic displacement sensors, surface acoustic wave resonant devices;
      - chemical or biochemical sensors, preferably metal oxide gas sensors, particularly tin oxide gas sensors, organic gas sensors, particularly inorganic Schottky devices, metal oxide field-effect transistor, electrochemical cell sensors, infrared sensors, surface plasmon sensors;
      - sintered metal oxide sensors, phthalocyanine sensors, conducting polymer sensors, lipid coating sensors and metal FET structures;
      - metal oxide sensors, preferably as catalytic gas sensors, organic semiconducting gas sensors, solid electrolyte gas sensors, Langmuir-Blodgett films, and mixtures thereof,

or

II) only quartz-crystal microbalance sensors alone are used as sensors, especially gold coated quartz-crystal microbalance sensors.

3. Sensor array according to claim 1 or 2, **characterized in that** the sensor array comprises

   A) at least two different chiral metal-organic frameworks, preferably at least three different chiral metal-organic frameworks, especially preferred three different chiral metal-organic frameworks,
   B) at least two different achiral metal-organic frameworks, preferably at least three different achiral metal-organic frameworks, especially preferred three different achiral metal-organic frameworks.

4. Sensor array according to any of the preceding claims, **characterized in that** the chiral metal-organic frameworks are enantiopure.

5. Sensor array according to any of the preceding claims, **characterized in that** each chiral or achiral metal-organic framework has a three-layered structure,

   a) a first layer of the respective chiral or achiral group,
   b) a second layer of the respective chiral or achiral group,
   c) between these two layers a) and b) a linker layer L,

   wherein the respective chiral or achiral groups in layers a) and b) are the same, and preferably the respective layers are monolayers, particularly self-assembled monolayers of the respective groups or linkers.

6. Sensor array according to any of the preceding claims, **characterized in that** the linkers L are N-donor ligands, preferably selected from the group consisting of diazabicyclo[2.2.2]octane (dabco), 4,4'-bipyridyl (BiPy) and 1,4-bis(4-pyridyl)benzene (BiPyB).

7. Sensor array according to any of the preceding claims, **characterized in that** the chiral metal-organic framework A) is selected from the group consisting of chirMOF1, chirMOF2, chirMOF3 and combinations thereof.

8. Sensor array according to any of the preceding claims, **characterized in that** the achiral metal-organic framework B) is selected from the group consisting of achirMOF1, achirMOF2, achirMOF3 and combinations thereof.

9. Sensor array according to any of the preceding claims, **characterized in that** the sensor substrates are gold-coated quartz-crystal microbalance substrates which are additionally functionalized, preferably functionalized with one or more self-assembled organic monolayers, particularly preferred one or more 11-mercapto-1-undecanol self-assembled monolayers.

10. Sensor array according to any of the preceding claims, **characterized in that** it comprises or consists of at least one group of

    A) three different chiral metal-organic frameworks, being chirMOF1, chirMOF2, chirMOF3, respectively, and
    B) three different achiral metal-organic frameworks being achirMOF1, achirMOF2, achirMOF3, respectively,

    wherein the metal organic frameworks are each coated onto one optionally functionalized quartz-crystal microbalance sensor.

11. Electronic nose comprising

    i) a means receiving a fluid to be analysed and supplying the fluid to a detection region, preferably a cavity,
    ii) one or more sensor arrays according to any one of claims 1 to 10 arranged in that detection region and configured to come into contact with the fluid,
    iii) a means for evaluating the sensor data,
    iv) a means for outputting the evaluated data.

12. Process for detecting and discriminating enantiomeric substances or mixtures comprising or consisting of enantiomeric substances, comprising

I) providing a substance or substance mixture,
IIa) passing the substance or substance mixture over a sensor array according to any one of claims 1 to 10, or
IIb) applying the substance or substance mixture to an electronic nose according to claim 11,
III) evaluating the sensor signals, preferably with an algorithm, particularly preferably with a k-nearest algorithm,
IV) outputting and/or storing of the result of evaluation step III).

13. Process according to claim 12, wherein the substances are selected from the group consisting of R-limonene, S-limonene, R-1-phenylethanol, S-1-phenylethanol, R-1-phenylethylamine, S-1-phenylethylamine, R-2-octanol, S-2-octanol, methyl (R)-lactate, methyl (S)-lactate and mixtures thereof.

14. Use of a sensor array according to any one of claims 1 to 10 or of an electronic nose according to claim 11 for the detection and enantioselective discrimination of chiral substances, preferably selected from the group consisting of R-limonene, S-limonene, R-1-phenylethanol, S-1-phenylethanol, R-1-phenylethylamine, S-1-phenylethylamine, R-2-octanol, S-2-octanol, methyl (R)-lactate, methyl (S)-lactate and mixtures thereof, particularly enantiomeric substances, more particularly enantiomeric substances selected from the group consisting of R-/S-limonene, R-/S-1-phenylethanol, R-/S-1-phenylethylamine, R-/S-2-octanol, methyl (R/S)-lactate and mixtures thereof.

15. Portable detection kit for the detection and enantioselective discrimination of chiral substances comprising:

   A) a first sample-housing comprising in its interior:

      A1) a gastight mixing vessel configured to allow a sample to be added into it, the vessel comprising a heating device and optionally a mixing device, the vessel being connected to the housing such that sample addition is possible without opening the housing,
      A2) a feed line through which evaporated sample gas can flow away from the mixing vessel, the feed line comprising a valve, wherein the feed line is connected to the mixing vessel and an adapter arranged at a wall of the housing,
      A3) a return line through which analysed sample gas can flow to the mixing vessel, the return line comprising a valve, and optionally a pump, wherein the return line is connected to an adapter arranged at a wall of the housing and the mixing vessel, the pump, if present, being arranged between the valve and the mixing vessel,
      A4) either a current adapter or at least one primary or secondary battery to provide current for the heating device, for the mixing device, if present, and the pump, if present,

   B) a second detection-housing comprising:

      B1) at least one sensor array according to any one of claims 1 to 10, along with the necessary electronics,
      B2) optionally at least one frequency counter along with the necessary electronics,
      B3) either at least one adapter for wire based connection to a computer or at least one wireless connectivity device, or another indicator configured to indicate the presence of a given compound upon receiving the corresponding signal from the sensor array,
      B4) either a current adapter or at least one primary or secondary battery to provide current for the sensor array along with the electronics, for the frequency counter along with the electronics and for the pump, if present,

   C) further material comprising at least one syringe, optionally a portable nitrogen bottle, optionally connection tubes, pipes or lines for connecting the housings to each other, optionally computer adapter cables,

   wherein
   the two housings are connectable to each other via tubes or lines or pipes to be connected to adapters in the walls of the respective housings or directly via housing-adapters configured to fit directly with each other.


## Patentansprüche

1. Sensorarray umfassend oder bestehend aus

   A) mindestens einer chiralen metallorganischen Gerüstverbindung,
   B) mindestens einer achiralen metallorganischen Gerüstverbindung,
   wobei die metallorganischen Gerüstverbindungen jeweils auf mindestens ein Sensorsubstrat beschichtet sind und die unterschiedlich beschichteten Sensoren das Array bilden,
**dadurch gekennzeichnet, dass** die Sensorsubstrate Quarzkristall-MikrowaagenSensoren sind.

2. Sensorarray gemäß Anspruch 1, **dadurch gekennzeichnet, dass** die Sensorsubstrate

I) mit einem oder mehreren Sensoren kombiniert werden, ausgewählt aus der Gruppe bestehend aus:

- faseroptischen Sensoren und akustischen Oberflächenwellensensoren;
- Festkörperdetektoren, vorzugsweise Mikrosensoren für ultraviolette, sichtbare und nahinfrarote Strahlung, insbesondere als fotoleitende Zellen, Fotodioden, Fototransistoren;
- mechanische Sensoren, vorzugsweise Wegsensoren, kapazitive und induktive Wegsensoren, optische Wegsensoren, Ultraschall-Wegsensoren, akustische Oberflächenwellen-Resonanzgeräte;
- chemische oder biochemische Sensoren, vorzugsweise Metalloxid-Gassensoren, insbesondere Zinnoxid-Gassensoren, organische Gassensoren, insbesondere anorganische Schottky-Vorrichtungen, Metalloxid-Feldeffekttransistoren, elektrochemische Zellsensoren, Infrarotsensoren, Oberflächenplasmonsensoren;
- gesintertes Metalloxid-Sensoren, Phthalocyanin-Sensoren, Sensoren mit leitenden Polymeren, Sensoren mit Lipidbeschichtung und Metall-FET-Strukturen;
- Metalloxidsensoren, vorzugsweise als katalytische Gassensoren, organische Halbleiter-Gassensoren, Festelektrolyt-Gassensoren, Langmuir-Blodgett-Filme,
und Mischungen davon,

oder
II) nur Quarzkristall-Mikrowaagensensoren allein als Sensoren verwendet werden, insbesondere goldbeschichtete Quarzkristall-MikrowaagenSensoren.

3. Sensorarray gemäß Anspruch 1 oder 2, **dadurch gekennzeichnet, dass** das Sensorarray umfasst:

A) mindestens zwei verschiedene chirale metallorganische Gerüstverbindungen, vorzugsweise mindestens drei verschiedene chirale metallorganische Gerüstverbindungen, besonders bevorzugt drei verschiedene chirale metallorganische Gerüstverbindungen,
B) mindestens zwei verschiedene achirale metallorganische Gerüstverbindungen, vorzugsweise mindestens drei verschiedene achirale metallorganische Gerüstverbindungen, besonders bevorzugt drei verschiedene achirale metallorganische Gerüstverbindungen.

4. Sensorarray gemäß einem der vorhergehenden Ansprüche, **dadurch gekennzeichnet, dass** die chiralen metallorganischen Gerüstverbindungen enantiomerenrein sind.

5. Sensorarray gemäß einem der vorangehenden Ansprüche, **dadurch gekennzeichnet, dass** jede chirale oder achirale metallorganische Gerüstverbindung einen dreischichtigen Aufbau aufweist,

a) eine erste Schicht aus der jeweiligen chiralen oder achiralen Gruppe,
b) eine zweite Schicht der jeweiligen chiralen oder achiralen Gruppe,
c) zwischen diesen beiden Schichten a) und b) eine Linkerschicht L,
wobei die jeweiligen chiralen oder achiralen Gruppen in den Schichten a) und b) dieselben sind,
und vorzugsweise die jeweiligen Schichten Monoschichten, insbesondere selbstorganisierte Monoschichten der jeweiligen Gruppen oder Linker sind.

6. Sensorarray gemäß einem der vorhergehenden Ansprüche, **dadurch gekennzeichnet, dass** die Linker L N-Donor-Liganden sind, vorzugsweise ausgewählt aus der Gruppe bestehend aus Diazabicyclo[2.2.2]octan (Dabco), 4,4'-Bipyridyl (BiPy) und 1,4-Bis(4-pyridyl)benzol (BiPyB).

7. Sensorarray gemäß einem der vorhergehenden Ansprüche, **dadurch gekennzeichnet, dass** die chirale metallorganische Gerüstverbindung A) ausgewählt ist aus der Gruppe bestehend aus chirMOF1, chirMOF2, chirMOF3 und Kombinationen davon.

8. Sensorarray gemäß einem der vorhergehenden Ansprüche, **dadurch gekennzeichnet, dass** die achirale metallorganische Gerüstverbindung B) ausgewählt ist aus der Gruppe bestehend aus achirMOF1, achirMOF2, achirMOF3 und Kombinationen davon.

9. Sensorarray gemäß einem der vorhergehenden Ansprüche, **dadurch gekennzeichnet, dass** die Sensorsubstrate goldbeschichtete Quarzkristall-Mikrowaagen-Substrate sind, die zusätzlich funktionalisiert sind, vorzugsweise funktionalisiert mit einer oder mehreren selbstorganisierten organischen Monoschichten, besonders bevorzugt einer oder mehreren selbstorganisierten 11-Mercapto-1-Undecanol-Schichten.

10. Sensorarray gemäß einem der vorhergehenden Ansprüche, **dadurch gekennzeichnet, dass** sie mindestens eine Gruppe aus

A) drei verschiedenen chiralen metallorganischen Gerüstverbindungen, nämlich chirMOF1, chirMOF2 bzw. chirMOF3, und
B) drei verschiedenen achiralen metallorganischen Gerüstverbindungen, nämlich achirMOF1, achirMOF2 und achirMOF3,
umfasst oder daraus besteht,
wobei die metallorganischen Gerüstverbindungen jeweils auf einen optional funktionalisierten Quarzkristall-Mikrowaagen-Sensor beschichtet sind.

11. Elektronische Nase, umfassend

i) eine Einrichtung, die ein zu analysierendes Fluid aufnimmt und das Fluid einem Erfassungsbereich, vorzugsweise einem Hohlraum, zuführt,
ii) ein oder mehrere Sensorarrays gemäß einem der Ansprüche 1 bis 10, die in diesem Erfassungsbereich angeordnet und so konfiguriert sind, dass sie mit dem Fluid in Kontakt kommen,
iii) eine Einrichtung zum Auswerten der Sensordaten,
iv) eine Einrichtung zum Ausgeben der ausgewerteten Daten.

12. Verfahren zum Nachweis und Unterscheiden von enantiomeren Substanzen oder Gemischen umfassend enantiomere Stoffe oder bestehend aus diesen, umfassend

I) Bereitstellen einer Substanz oder eines Substanzgemisches,
IIa) Führen der Substanz oder des Substanzgemisches über ein Sensorarray gemäß einem der Ansprüche 1 bis 10, oder
IIb) Aufbringen der Substanz oder des Substanzgemisches auf eine elektronische Nase gemäß Anspruch 11,
III) Auswerten der Sensorsignale, vorzugsweise mit einem Algorithmus, besonders bevorzugt mit einem K-Nearest-Algorithmus,
IV) Ausgeben und/oder Speichern des Ergebnisses von Auswerteschritt III).

13. Verfahren gemäß Anspruch 12, wobei die Substanzen ausgewählt sind aus der Gruppe bestehend aus R-Limonen, S-Limonen, R-1-Phenylethanol, S-1-Phenylethanol, R-1-Phenylethylamin, S-1-Phenylethylamin, R-2-Octanol, S-2-Octanol, Methyl-(R)-lactat, Methyl-(S)-lactat und Mischungen davon.

14. Verwendung eines Sensorarrays gemäß einem der Ansprüche 1 bis 10 oder einer elektronischen Nase gemäß Anspruch 11 zum Nachweis und zur enantioselektiven Unterscheidung von chiralen Substanzen, vorzugsweise ausgewählt aus der Gruppe bestehend aus R-Limonen, S-Limonen, R-1-Phenylethanol, S-1-Phenylethanol, R-1-Phenylethylamin, S-1-Phenylethylamin, R-2-Octanol, S-2-Octanol, Methyl-(R)-lactat, Methyl-(S)-lactat und Mischungen davon, besonders enantiomeren Substanzen, insbesondere enantiomere Substanzen ausgewählt aus der Gruppe bestehend aus R-/S-Limonen, R-/S-1-Phenylethanol, R-/S-1-Phenylethylamin, R-/S-2-Octanol, Methyl-(R/S)-lactat und Mischungen davon.

15. Tragbares Nachweiskit für den Nachweis und die enantioselektive Unterscheidung chiraler Substanzen, umfassend:

A) ein erstes Probengehäuse, das in seinem Inneren umfasst:

A1) ein gasdichtes Mischgefäß, das so konfiguriert ist, dass eine Probe hineingegeben werden kann, wobei das Gefäß eine Heizvorrichtung und optional eine Mischvorrichtung umfasst, wobei das Gefäß so mit dem Gehäuse verbunden ist, dass eine Probenzugabe ohne Öffnen des Gehäuses möglich ist,
A2) eine Zuleitung, durch die verdampftes Probengas aus dem Mischgefäß abströmen kann, wobei die Zuleitung ein Ventil umfasst, wobei die Zuleitung mit dem Mischgefäß und einem an einer Wand des Gehäuses angeordneten Adapter verbunden ist,

A3) eine Rücklaufleitung, durch die analysiertes Probengas zum Mischgefäß strömen kann, wobei die Rücklaufleitung ein Ventil und optional eine Pumpe umfasst, wobei die Rücklaufleitung mit einem an einer Wand des Gehäuses angeordneten Adapter und dem Mischgefäß verbunden ist, wobei die Pumpe, falls vorhanden, zwischen dem Ventil und dem Mischgefäß angeordnet ist,

A4) entweder einen Stromadapter oder mindestens eine Primär- oder Sekundärbatterie zur Bereitstellung von Strom für die Heizvorrichtung, für die Mischvorrichtung, falls vorhanden, und die Pumpe, falls vorhanden,

B) ein zweites Detektionsgehäuse, umfassend:

B1) mindestens ein Sensorarray gemäß einem der Ansprüche 1 bis 10 zusammen mit der erforderlichen Elektronik,
B2) optional mindestens einen Frequenzzähler zusammen mit der erforderlichen Elektronik,
B3) entweder mindestens einen Adapter für eine drahtgebundene Verbindung zu einem Computer oder mindestens ein drahtloses Verbindungsgerät oder einen anderen Indikator, konfiguriert, das Vorhandensein einer gegebenen Verbindung anzuzeigen, wenn das entsprechende Signal vom Sensorarray empfangen wird,
B4) entweder einen Stromadapter oder mindestens eine primäre oder sekundäre Batterie zur Bereitstellung von Strom für den Sensorarray zusammen mit der Elektronik, für den Frequenzzähler zusammen mit der Elektronik und für die Pumpe, falls vorhanden,

C) weiteres Material umfassend mindestens eine Spritze, optional eine tragbare Stickstoffflasche, optional Verbindungsschläuche, Rohre oder Leitungen zur Verbindung der Gehäuse miteinander, optional Computeradapterkabel,

wobei
die beiden Gehäuse über Schläuche oder Leitungen oder Rohre, die mit Adaptern in den Wänden der jeweiligen Gehäuse zu verbinden sind, oder direkt über Gehäuseadapter, die so konfiguriert sind, dass sie direkt ineinander passen, miteinander verbindbar sind.

**Revendications**

1.  Réseau de capteurs comprenant ou consistant en

    A) au moins une structure métallo-organique chirale,
    B) au moins une structure métallo-organique achirale,
    dans lequel les structures métallo-organiques sont chacune appliquées sur au moins un substrat de capteur, et les capteurs revêtus différemment forment le réseau,
    **caractérisé en ce que** les substrats des capteurs sont des capteurs de microbalance à quartz.

2.  Réseau de capteurs selon la revendication 1,
    **caractérisé en ce que** les substrats des capteurs sont

    I) combinés à un ou plusieurs capteurs choisis dans le groupe comprenant

    - les capteurs à fibres optiques et les capteurs d'ondes acoustiques de surface ;
    - les détecteurs à l'état solide, de préférence tels que les microcapteurs de rayonnement ultraviolet, visible et proche infrarouge, en particulier les cellules photoconductrices, les photodiodes, les phototransistors ;
    - les capteurs mécaniques, de préférence les microcapteurs de déplacement, les capteurs de déplacement capacitifs et inductifs, les capteurs de déplacement optiques, les capteurs de déplacement ultrasoniques, les dispositifs résonants à ondes acoustiques de surface ;
    - les capteurs chimiques ou biochimiques, de préférence les capteurs de gaz à oxyde métallique, en particulier les capteurs de gaz à oxyde d'étain, les capteurs de gaz organiques, en particulier les dispositifs Schottky inorganiques, les transistors à effet de champ à oxyde métallique, les capteurs de cellules électrochimiques, les capteurs infrarouges, les capteurs de plasmons de surface ;
    - les capteurs à oxyde métallique frittés, les capteurs à phtalocyanine, les capteurs à polymère conducteur, les capteurs à revêtement lipidique et les structures FET métalliques ;

- les capteurs à oxyde métallique, de préférence tels que les capteurs de gaz catalytiques, les capteurs de gaz organiques semi-conducteurs, les capteurs de gaz à électrolyte solide, les films de Langmuir-Bloodgett,

et leurs mélanges, ou

II) seuls des capteurs à microbalance de quartz sont utilisés comme capteurs, en particulier des capteurs à microbalance de quartz revêtus d'or.

3. Réseau de capteurs selon la revendication 1 ou 2, **caractérisé en ce que** le réseau de capteurs comprend

A) au moins deux structures métallo-organiques chirales différentes, de préférence au moins trois structures métallo-organiques chirales différentes, de préférence encore trois structures métallo-organiques chirales différentes,
B) au moins deux structures métallo-organiques achirales différentes, de préférence au moins trois structures métallo-organiques achirales différentes, de préférence encore trois structures métallo-organiques achirales différentes.

4. Réseau de capteurs selon l'une des revendications précédentes, **caractérisé en ce que** les structures métallo-organiques chirales sont énantiopures.

5. Réseau de capteurs selon l'une des revendications précédentes, **caractérisé en ce que** chaque structure métallo-organique chirale ou achirale présente une structure à trois couches, à savoir

a) une première couche du groupe chiral ou achiral respectif,
b) une deuxième couche du groupe chiral ou achiral respectif,
c) une couche de lieur L entre ces deux couches a) et b),

dans lequel les groupes chiraux ou achiraux respectifs dans les couches a) et b) sont les mêmes et, de préférence, les couches respectives sont des monocouches, en particulier des monocouches auto-assemblées des groupes ou lieurs respectifs.

6. Réseau de capteurs selon l'une des revendications précédentes, **caractérisé en ce que** les lieurs L sont des ligands donneurs N, de préférence choisis dans le groupe constitué par le diazabicyclo[2.2.2]octane (dabco), le 4,4'-bipyridyle (BiPy) et le 1,4-bis(4-pyridyl)benzène (BiPyB).

7. Réseau de capteurs selon l'une des revendications précédentes, **caractérisé en ce que** la structure métallo-organique chirale A) est choisie dans le groupe constitué de chirMOF1, chirMOF2, chirMOF3 et leurs combinaisons.

8. Réseau de capteurs selon l'une des revendications précédentes, **caractérisé en ce que** la structure métallo-organique achirale B) est choisie dans le groupe constitué de achirMOF1, achirMOF2, achirMOF3 et leurs combinaisons.

9. Réseau de capteurs selon l'une des revendications précédentes, **caractérisé en ce que** les substrats des capteurs sont des substrats de microbalance à quartz revêtus d'or qui sont en supplément fonctionnalisés, de préférence fonctionnalisés avec une ou plusieurs monocouches organiques auto-assemblées, de préférence une ou plusieurs monocouches auto-assemblées de 11-mercapto-1-undécanol.

10. Réseau de capteurs selon l'une des revendications précédentes, **caractérisé en ce qu'**il comprend ou consiste en au moins un groupe de

A) trois structures métallo-organiques chirales différentes, à savoir chirMOF1, chirMOF2, chirMOF3, respectivement, et
B) trois structures métallo-organiques achirales différentes, à savoir achirMOF1, achirMOF2, achirMOF3, respectivement,

dans lequel les structures métallo-organiques sont chacune appliquées sur un capteur de microbalance à quartz fonctionnalisé de manière facultative.

**11.** Nez électronique comprenant

i) un dispositif recevant un fluide à analyser et acheminant le fluide vers une zone de détection, de préférence une cavité,

ii) un ou plusieurs réseaux de capteurs selon l'une des revendications 1 à 10, disposés dans cette zone de détection et configurés pour entrer en contact avec le fluide,

iii) un dispositif d'évaluation des données de capteur,

iv) un dispositif d'émission des données évaluées.

**12.** Procédé de détection et de discrimination de substances énantiomériques ou de mélanges comprenant des substances énantiomériques ou consistant en de telles substances, consistant à

I) fournir une substance ou un mélange de substances,

IIa) faire passer la substance ou le mélange de substances sur un réseau de capteurs selon l'une des revendications 1 à 10, ou

IIb) appliquer la substance ou le mélange de substances à un nez électronique selon la revendication 11,

III) évaluer des signaux des capteurs, de préférence à l'aide d'un algorithme, en particulier à l'aide d'un algorithme des k plus proches voisins,

IV) émettre et/ou stocker le résultat de l'étape d'évaluation III).

**13.** Procédé selon la revendication 12,
dans lequel les substances sont choisies dans le groupe constitué de R-limonène, S-limonène, R-1-phényléthanol, S-1-phényléthanol, R-1-phényléthylamine, S-1-phényléthylamine, R-2-octanol, S-2-octanol, (R)-lactate de méthyle, (S)-lactate de méthyle et leurs mélanges.

**14.** Utilisation d'un réseau de capteurs selon l'une des revendications 1 à 10 ou d'un nez électronique selon la revendication 11 pour la détection et la discrimination énantiosélective des substances chirales, de préférence choisies dans le groupe constitué de R-limonène, S-limonène, R-1-phényléthanol, S-1-phényléthanol, R-1-phényléthylamine, S-1-phényléthylamine, R-2-octanol, S-2-octanol, (R)-lactate de méthyle, (S)-lactate de méthyle et leurs mélanges, en particulier des substances énantiomériques, plus particulièrement des substances énantiomériques choisies dans le groupe constitué de R-/S-limonène, R-/S-1-phényléthanol, R-/S-1-phényléthylamine, R-/S-2-octanol, (R/S)-lactate de méthyle et leurs mélanges.

**15.** Kit de détection portable pour la détection et la discrimination énantiosélective des substances chirales comprenant :

A) un premier boîtier d'échantillonnage comprenant à l'intérieur :

A1) un récipient de mélange étanche aux gaz, configuré pour permettre l'ajout d'un échantillon, le récipient comprenant un dispositif de chauffage et éventuellement un dispositif de mélange, le récipient étant relié au boîtier de telle sorte que l'ajout de l'échantillon soit possible sans ouvrir le boîtier,

A2) une conduite d'alimentation par laquelle le gaz d'échantillonnage évaporé peut s'écouler en éloignement du récipient de mélange, la conduite d'alimentation comprenant une vanne, la conduite d'alimentation étant reliée au récipient de mélange et à un adaptateur disposé sur une paroi du boîtier,

A3) une conduite de retour par laquelle le gaz d'échantillonnage analysé peut s'écouler vers le récipient de mélange, la conduite de retour comprenant une vanne et, éventuellement, une pompe, la conduite de retour étant reliée à un adaptateur disposé sur une paroi du boîtier et au récipient de mélange, la pompe, si présente, étant disposée entre la vanne et le récipient de mélange,

A4) soit un adaptateur électrique, soit au moins une batterie primaire ou secondaire pour fournir de l'électricité au dispositif de chauffage, au dispositif de mélange, si présent, et à la pompe, si présente,

B) un deuxième boîtier de détection comprenant

B1) au moins un réseau de capteurs selon l'une des revendications 1 à 10, avec l'électronique nécessaire,

B2) éventuellement au moins un compteur de fréquence avec l'électronique nécessaire,

B3) soit au moins un adaptateur pour une connexion filaire à un ordinateur, soit au moins un dispositif de connectivité sans fil, soit encore un autre indicateur configuré pour indiquer la présence d'un composé donné lors de la réception du signal correspondant provenant du réseau de capteurs,

B4) soit un adaptateur électrique, soit au moins une batterie primaire ou secondaire pour fournir de l'électricité au réseau de capteurs avec l'électronique, au compteur de fréquence avec l'électronique et à la pompe, si présente,

C) un autre matériel comprenant au moins une seringue, éventuellement une bouteille d'azote portable, éventuellement des tubes, des conduites ou des lignes de connexion pour relier les boîtiers l'un à l'autre, éventuellement des câbles d'adaptateur informatique,

dans lequel
les deux boîtiers peuvent être reliés l'un à l'autre par des tubes ou des lignes ou des conduites à connecter à des adaptateurs dans les parois des boîtiers respectifs, ou directement par des adaptateurs de boîtier configurés pour s'emboîter directement l'un dans l'autre.

Fig. 1

Fig. 2

Fig. 3a

Fig. 3b

Fig. 3c

Fig. 3d

Fig. 4a

Fig. 4b

Fig. 4c

Fig. 4d

Fig. 4e

Fig. 4f

**limonene**

achirMOF3    chirMOF1

achirMOF2    chirMOF2

achirMOF1    chirMOF3

15
12
9
6
3

■ R-limonene
○ S-limonene

Fig. 5a

**2-octanol**

Fig 5b

# 1-phenylethanol

Fig. 5c

**1-phenylethylamine**

Fig. 5d

**methyl lactate**

Fig. 5e

**true class**

| | R-1-phenylethylamine | S-1-phenylethylamine | R-2-octanol | S-2-octanol | methyl S-lactate | methyl R-lactate | R-1-phenylethanol | S-1-phenylethanol | R-limonene | S-limonene |
|---|---|---|---|---|---|---|---|---|---|---|
| R-1-phenylethylamine | 99% | 1% | | | | | | | | |
| S-1-phenylethylamine | 1% | 99% | | | | | | | | |
| R-2-octanol | | | 89% | 8% | | | | | | 1% |
| S-2-octanol | | | 9% | 92% | | 1% | | | | |
| methyl S-lactate | | | | | 98% | | | | | |
| methyl R-lactate | | | | | 1% | 99% | | 1% | | |
| R-1-phenylethanol | | | | | | | >99% | | | |
| S-1-phenylethanol | | | | | | | <1% | 100% | | |
| R-limonene | | | | | 1% | | | | 96% | 2% |
| S-limonene | | | 2% | | | | | | 3% | 96% |

**predicted class**

Fig. 6

Fig. 7

Fig. 8

**EP 4 176 252 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9940423 A1
- US 20150150778 A1
- WO 2008096239 A1